# EUROPEAN PATENT APPLICATION

(11) **EP 4 801 182 A1**
(43) Date of publication of application: **02.09.2026**
(21) Application number: 24896347.2
(22) Date of filing: 19.11.2024
(51) Int. Cl.: H04W 74/0833

(54) **RANDOM ACCESS METHOD AND APPARATUS**

(30) Priority: 30.11.2023 CN 202311637433
(71) Applicant: Huawei Technologies Co., Ltd., Shenzhen, Guangdong 518129 (CN)
(72) Inventor: WANG, Xiaona, Shenzhen, Guangdong 518129 (CN); YAN, Mao, Shenzhen, Guangdong 518129 (CN); LIU, Fengwei, Shenzhen, Guangdong 518129 (CN)
(74) Representative: Goddar, Heinz J.
(86) International application number: PCT/CN2024/132998
(87) International publication number: WO 2025/113256

(57) **Abstract**

This application provides a random access method and apparatus, and belongs to the field of communication technologies, to improve a random access success rate of a terminal. In the method, a terminal may send a message 1 Msg1 N times when performing random access. For example, the terminal may send a preamble sequence N times based on a resource that is configured by a network device and that is for sending the preamble sequence N times. In this way, the terminal may send the Msg1 by using more resources, to improve an uplink channel coverage capability of the terminal during initial access, thereby improving a random access success rate of the terminal.

## Description

This application claims priority to Chinese Patent Application No. 202311637433.3, filed with the China National Intellectual Property Administration on November 30, 2023 and entitled "RANDOM ACCESS METHOD AND APPARATUS", which is incorporated herein by reference in its entirety.

### TECHNICAL FIELD

This application relates to the field of communication, and in particular, to a random access method and apparatus.

### BACKGROUND

In 5th generation mobile communication technology (5th generation mobile communication technology, 5G) new radio (new radio, NR), a terminal may access a 5G network by using a random access procedure. For example, a network device (for example, a base station) broadcasts a synchronization signal and a system message on a specific time-frequency resource. After being powered on or when accessing the network again, the terminal scans the synchronization signal of the network device to perform downlink time and frequency synchronization, and receives configuration information related to a random access resource in the system message. Then, the terminal selects, based on the configuration information of the random access resource and a received synchronization signal and physical broadcast channel block (synchronization signal and physical broadcast channel block, SSB), a random access resource associated with the SSB, and sends a random access signal, that is, a message (message, Msg) 1, by using the random access resource. Correspondingly, the network device returns Msg2 to the terminal based on the received Msg1. After receiving the Msg2, the terminal sends Msg3 on a corresponding time-frequency resource based on configuration in the Msg2. After receiving the Msg3, the network device returns Msg4 to the terminal, to indicate that the terminal successfully accesses the network. After successfully accessing the 5G network, the terminal can use the 5G network.

However, in a process in which the terminal performs random access, the random access may fail due to various reasons. Therefore, how to improve a random access success rate of the terminal is a hot topic currently discussed.

### SUMMARY

Embodiments of this application provide a random access method and apparatus, to improve a random access success rate of a terminal.

To achieve the foregoing objective, this application uses the following technical solutions.

According to a first aspect, a random access method is provided. The method may be performed by a terminal, may be performed by a part of the terminal, for example, a processor, a chip, or a chip system of the terminal, or may be implemented by a logical module or software that can implement all or some functions of a terminal device. An example in which the method is performed by the terminal is used below for description. The method includes: receiving configuration information, and sending a preamble sequence N times based on the configuration information, where the configuration information indicates a resource for sending the preamble sequence N times, and N is an integer greater than 1.

Currently, in a random access procedure, the terminal sends Msg1 once through one antenna port. However, in a case of a poor signal or the like, a network device may not detect the Msg1. As a result, the network device cannot return Msg2 based on the Msg1. In this case, after timing of a random access response window ends, the terminal needs to send the Msg1 again, that is, perform random access again. In other words, in this case, access of the terminal fails, and the terminal needs to perform random access again. It can be learned from the method according to the first aspect that the terminal may send the Msg1 N times when performing random access. For example, the terminal may send the preamble sequence N times based on the resource that is configured by the network device and that is for sending the preamble sequence N times. In this way, the terminal may send the Msg1 by using more resources, to improve an uplink channel coverage capability of the terminal during initial access, thereby improving a random access success rate of the terminal.

In a possible design solution, the configuration information includes at least one of the following: a first random access channel occasion RO group for sending the preamble sequence N times, a first synchronization signal and physical broadcast channel block SSB group corresponding to an RO for sending the preamble sequence N times, or a first preamble sequence set for sending the preamble sequence N times. It may be understood that the first SSB group may be determined by the terminal based on quality of received SSBs. For example, the first SSB group includes at least one SSB with good quality obtained by the terminal through measurement. The first RO group may include N ROs. There is a mapping relationship between the first SSB group and the first RO group, and there is a mapping relationship between the first RO group and the first preamble sequence set. In other words, after determining the first SSB group, the terminal may determine the first RO group and a first preamble sequence group based on the first SSB group, and send the preamble sequence N times based on the first RO group and the first preamble sequence group.

Optionally, the first preamble sequence set includes at least one preamble sequence, and any preamble sequence in the at least one preamble sequence is sent N times in an access procedure. In this way, the terminal may select a preamble sequence from the first preamble sequence set, and send the preamble sequence N times. It may be understood that when any preamble sequence in the at least one preamble sequence is sent N times in the access procedure, the network device may jointly detect the preamble sequence, to improve the random access success rate of the terminal.

Optionally, the first SSB group includes M SSBs; and when M is greater than 1, index values of the M SSBs are consecutive, time-frequency domain resources of at least two SSBs in the M SSBs are located in a same slot, or time-frequency domain resources of at least two SSBs in the M SSBs are located in adjacent slots, where M is an integer greater than 0 and less than N. In other words, when the first SSB group includes a plurality of SSBs, the plurality of SSBs are adjacent SSBs. It may be understood that the M SSBs may be a plurality of SSBs with good quality in the SSBs received by the terminal. Generally, the plurality of SSBs with good quality detected by the terminal include an SSB whose beam covers a position of the SSB and at least one SSB adjacent to the SSB. In this way, when the terminal sends the preamble sequence N times by using beams corresponding to the plurality of SSBs, the access success rate of the terminal can be improved by using a joint receive gain of the plurality of beams in a scenario in which network quality is poor.

Further, the first RO group includes the N ROs, and the M SSBs are associated with the N ROs. In other words, there is the mapping relationship between the first SSB group and the first RO group. In this way, after determining the first SSB group, the terminal can further determine the first RO group based on the first SSB group, so that the terminal can determine the RO for sending the preamble sequence N times.

Further, when M is equal to 1, the N ROs have adjacent serial numbers, the N ROs occupy adjacent time domain positions, or the N ROs occupy different frequency domain positions of a same slot. In other words, when the first SSB group includes one SSB, the N ROs included in the first RO group may be N consecutive ROs in a plurality of ROs associated with the SSB. In this way, the network device can perform joint detection on preamble sequences sent on the N ROs, to improve the random access success rate of the terminal.

In a possible design solution, the sending the preamble sequence N times based on the configuration information includes: sending, based on the configuration information, the preamble sequence N times through different antenna ports. In this way, receiving by the network device is more robust. It may be understood that the preamble sequence may be sent N times through a same antenna port, which may be specifically flexibly set based on an actual case.

In a possible design solution, timing of a random access response window starts after sending of the preamble sequence for the N^{th} time is completed. In other words, the terminal sends the preamble sequence N times between after receiving the SSBs and after receiving a RAR message. In this way, overheads of the terminal can be reduced, and the terminal can be prevented from performing invalid detection.

In a possible design solution, after the sending the preamble sequence N times based on the configuration information, the method according to the first aspect further includes: receiving a random access response RAR message, where a transmit beam for the RAR message is related to at least one SSB in the first SSB group. In other words, after receiving N preamble sequences sent by the terminal, the network device may determine, based on a resource for receiving the N preamble sequences, the M SSBs included in the first SSB group, and determine the transmit beam for the RAR message based on the M SSBs.

Optionally, the RAR message includes scheduling information indicating a message 3 Msg3, the scheduling information includes at least one of the following: a sending manner, a transmit port, or a parameter for repeated sending, and the sending manner indicates whether to repeatedly send the Msg3. In other words, the sending manner of the Msg3 may be indicated by using the RAR message. In this way, the scheduling information of the Msg3 may be determined based on an actual case, to ensure that the network device receives the Msg3.

Optionally, after the receiving the RAR message, the method according to the first aspect further includes: sending the Msg3 Y times based on the RAR message, where an antenna port for sending the Msg3 Y times is at least partially the same as the antenna ports for sending the preamble sequence N times, and Y is an integer greater than 0. It may be understood that the terminal may determine, based on the antenna ports for sending the preamble sequence N times, the antenna port for sending the Msg3 Y times. The terminal may alternatively determine, based on the sending manner that is of the Msg3 and that is indicated by the network device by using the RAR message, the antenna port for sending the Msg3 Y times. Because the network device determines, based on an antenna port for sending the Msg1, the antenna port for sending the Msg3, the antenna port for sending the Msg3 Y times by the terminal is at least partially the same as the antenna ports for sending the preamble sequence N times.

According to a second aspect, a random access method is provided. The method may be performed by a network device, may be performed by a part of the network device, for example, a processor, a chip, or a chip system of the network device, or may be implemented by a logical module or software that can implement all or some functions of the network device, for example, a distributed unit. An example in which the method is performed by the network device is used below for description. The method includes: sending configuration information, where the configuration information indicates a resource for sending a preamble sequence N times, and N is an integer greater than 1; and receiving N preamble sequences, and sending a random access response RAR message based on the N preamble sequences.

In a possible design solution, the configuration information includes at least one of the following: a first random access channel occasion RO group for sending the preamble sequence N times, a first synchronization signal and physical broadcast channel block SSB group corresponding to an RO for sending the preamble sequence N times, or a first preamble sequence set for sending the preamble sequence N times.

Optionally, the first preamble sequence set includes at least one preamble sequence, and any preamble sequence in the at least one preamble sequence is sent N times in an access procedure.

Optionally, the first SSB group includes M SSBs; and when M is greater than 1, index values of the M SSBs are consecutive, time-frequency domain resources of at least two SSBs in the M SSBs are located in a same slot, or time-frequency domain resources of at least two SSBs in the M SSBs are located in adjacent slots, where M is an integer greater than 0 and less than N.

Further, the first RO group includes N ROs, and the M SSBs are associated with the N ROs.

Further, when M is equal to 1, the N ROs have adjacent serial numbers, the N ROs occupy adjacent time domain positions, or the N ROs occupy different frequency domain positions of a same slot.

In a possible design solution, a transmit beam for the RAR message is related to at least one SSB in the first SSB group.

In a possible design solution, the RAR message includes scheduling information indicating a message 3 Msg3, the scheduling information includes at least one of the following: a sending manner, a transmit port, or a parameter for repeated sending, and the sending manner indicates whether to repeatedly send the Msg3.

In addition, for technical effects of the method according to the second aspect, refer to the technical effects of the method according to the first aspect. Details are not described herein again.

According to a third aspect, a communication apparatus is provided. The communication apparatus includes modules configured to perform the method according to the first aspect, for example, a transceiver module and a processing module. For example, the transceiver module is configured to receive configuration information, where the configuration information indicates a resource for sending a preamble sequence N times, and N is an integer greater than 1; and the processing module is configured to send the preamble sequence N times based on the configuration information.

Optionally, the transceiver module may include a sending module and a receiving module. The sending module is configured to implement a sending function of the communication apparatus according to the third aspect, and the receiving module is configured to implement a receiving function of the communication apparatus according to the third aspect.

Optionally, the communication apparatus according to the third aspect may further include a storage module. The storage module stores a program or instructions. When the processing module executes the program or the instructions, the communication apparatus is caused to perform the method according to the first aspect.

It may be understood that the communication apparatus according to the third aspect may be a terminal, may be a chip (system) or another part or component that may be disposed in the terminal, or may be an apparatus including the terminal. This is not limited in this application.

According to a fourth aspect, a communication apparatus is provided. The communication apparatus includes modules configured to perform the method according to the second aspect, for example, a transceiver module and a processing module. For example, the processing module is configured to send configuration information, where the configuration information indicates a resource for sending a preamble sequence N times, and N is an integer greater than 1; the transceiver module is configured to receive N preamble sequences; and the processing module is further configured to send a random access response RAR message based on the N preamble sequences.

Optionally, the transceiver module may include a sending module and a receiving module. The sending module is configured to implement a sending function of the communication apparatus according to the fourth aspect, and the receiving module is configured to implement a receiving function of the communication apparatus according to the fourth aspect.

Optionally, the communication apparatus according to the fourth aspect may further include a storage module. The storage module stores a program or instructions. When the processing module executes the program or the instructions, the communication apparatus is caused to perform the method according to the second aspect.

It may be understood that the communication apparatus according to the fourth aspect may be a network device, may be a chip (system) or another part or component that may be disposed in the network device, or may be an apparatus including the network device. This is not limited in this application.

According to a fifth aspect, a communication apparatus is provided. The communication apparatus includes a processor. The processor is configured to perform the method according to any one of the possible implementations of the first aspect or the second aspect.

In a possible design solution, the communication apparatus according to the fifth aspect may further include a transceiver. The transceiver may be a transceiver circuit or an interface circuit. The transceiver may be used by the communication apparatus according to the fifth aspect to communicate with another communication apparatus.

In a possible design solution, the communication apparatus according to the fifth aspect may further include a memory. The memory and the processor may be integrated together, or may be disposed separately. The memory may be configured to store a computer program and/or data related to the method according to the first aspect or the second aspect.

In this embodiment of this application, the communication apparatus according to the fifth aspect may be the terminal or the network device according to the first aspect or the second aspect, a chip (system) or another part or component that may be disposed in the terminal or the network device, or an apparatus that includes the terminal or the network device.

According to a sixth aspect, a communication apparatus is provided. The communication apparatus includes a processor. The processor is coupled to a memory, and the processor is configured to execute a computer program stored in the memory, to cause the communication apparatus to perform the method according to any one of the possible implementations of the first aspect or the second aspect.

In a possible design solution, the communication apparatus according to the sixth aspect may further include a transceiver. The transceiver may be a transceiver circuit or an interface circuit. The transceiver may be used by the communication apparatus according to the sixth aspect to communicate with another communication apparatus.

In this embodiment of this application, the communication apparatus according to the sixth aspect may be the terminal or the network device according to the first aspect or the second aspect, a chip (system) or another part or component that may be disposed in the terminal or the network device, or an apparatus that includes the terminal or the network device.

According to a seventh aspect, a communication chip is provided, and includes a logic circuit and a communication interface. The logic circuit is configured to execute computer instructions, the communication interface is used by the communication chip to communicate with another apparatus or chip, and when the logic circuit executes the computer instructions, the method according to any one of the implementations of the first aspect or the second aspect is implemented.

According to an eighth aspect, a communication system is provided. The communication system includes an apparatus configured to perform the method according to the first aspect and/or an apparatus configured to perform the method according to the second aspect.

According to a ninth aspect, a computer-readable storage medium is provided, and includes a computer program or instructions. When the computer program or the instructions are run on a computer, the computer is caused to perform the method according to any one of the possible implementations of the first aspect or the second aspect.

According to a tenth aspect, a computer program product is provided, and includes a computer program or instructions. When the computer program or the instructions are run on a computer, the computer is caused to perform the method according to any one of the possible implementations of the first aspect or the second aspect.

### BRIEF DESCRIPTION OF DRAWINGS

FIG. 1 is a diagram of an architecture of a communication system according to an embodiment of this application;
FIG. 2 is a schematic flowchart of a random access procedure according to an embodiment of this application;
FIG. 3 is a diagram of a mapping relationship between a synchronization signal and physical broadcast channel block SSB and a random access occasion RO according to an embodiment of this application;
FIG. 4 is a diagram of a mapping relationship between an SSB and a preamble sequence according to an embodiment of this application;
FIG. 5 is a diagram of a random access response message according to an embodiment of this application;
FIG. 6 is a schematic flowchart of a random access method according to an embodiment of this application;
FIG. 7 is a diagram 1 of configuring N ROs when performing RO-based grouping according to an embodiment of this application;
FIG. 8 is a diagram 2 of configuring N ROs when performing RO-based grouping according to an embodiment of this application;
FIG. 9 is a diagram 3 of configuring N ROs when performing RO-based grouping according to an embodiment of this application;
FIG. 10 is a diagram 1 of configuring RO groups corresponding to different quantities of sending times when performing RO-based grouping according to an embodiment of this application;
FIG. 11 is a diagram 4 of configuring N ROs when performing RO-based grouping according to an embodiment of this application;
FIG. 12 is a diagram 5 of configuring N ROs when performing RO-based grouping according to an embodiment of this application;
FIG. 13 is a diagram 6 of configuring N ROs when performing RO-based grouping according to an embodiment of this application;
FIG. 14 is a diagram 7 of configuring N ROs when performing RO-based grouping according to an embodiment of this application;
FIG. 15 is a diagram 2 of configuring RO groups corresponding to different quantities of sending times when performing RO-based grouping according to an embodiment of this application;
FIG. 16 is a diagram 3 of configuring RO groups corresponding to different quantities of sending times when performing RO-based grouping according to an embodiment of this application;
FIG. 17 is a diagram 1 of ROs when performing preamble sequence-based grouping according to an embodiment of this application;
FIG. 18 is a diagram 2 of ROs when performing preamble sequence-based grouping according to an embodiment of this application;
FIG. 19 is a diagram 3 of ROs when performing preamble sequence-based grouping according to an embodiment of this application;
FIG. 20 is a diagram 4 of ROs when performing preamble sequence-based grouping according to an embodiment of this application;
FIG. 21 is a diagram 5 of ROs when performing preamble sequence-based grouping according to an embodiment of this application;
FIG. 22 is a diagram 6 of ROs when performing preamble sequence-based grouping according to an embodiment of this application;
FIG. 23 is a diagram of a position relationship between a terminal and an SSB according to an embodiment of this application;
FIG. 24 is a diagram of an antenna port for sending a preamble sequence according to an embodiment of this application;
FIG. 25 is a diagram 1 of a structure of a communication apparatus according to an embodiment of this application; and
FIG. 26 is a diagram 2 of a structure of a communication apparatus according to an embodiment of this application.

### DESCRIPTION OF EMBODIMENTS

For ease of understanding embodiments of this application, a communication system to which embodiments of this application are applicable is first described.

The communication system includes a terminal and a network device. For the terminal device and the network device, refer to related descriptions of the following "terminal 120" and "network device 110". Details are not described herein again.

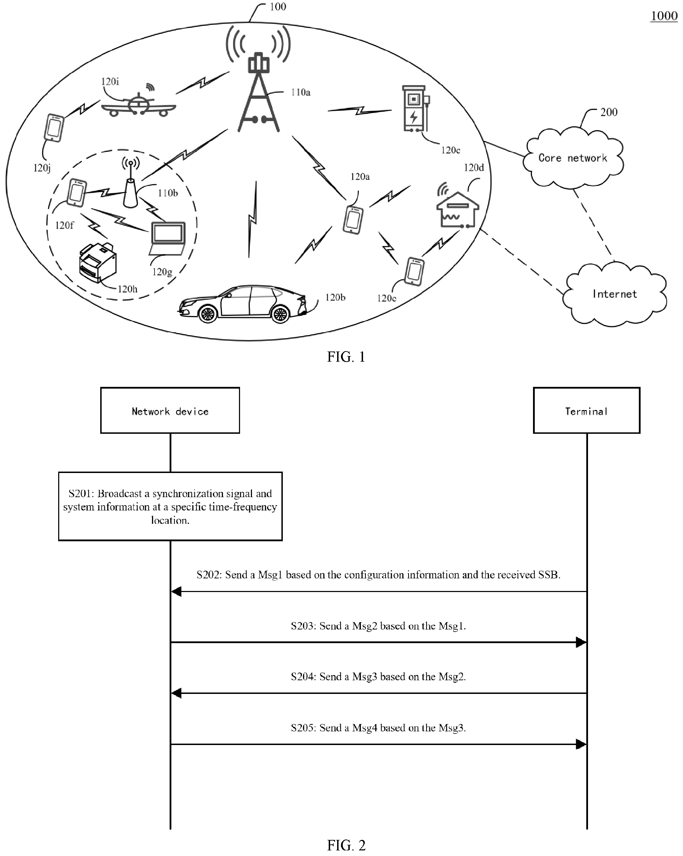

For ease of understanding of embodiments of this application, an application scenario to which this application is applicable is described by using an architecture of a communication system shown in FIG. 1 as an example. FIG. 1 is a diagram of a possible and non-limiting system. As shown in FIG. 1, a communication system 1000 includes a radio access network (radio access network, RAN) 100 and a core network (core network, CN) 200. The RAN 100 includes at least one network device (for example, 110a and 110b in FIG. 1, which are collectively referred to as 110) and at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the network device 110 in a wireless manner. The network device 110 is connected to the core network 200 in a wireless or wired manner. A core network device in the core network 200 and the network device 110 in the RAN 100 may be different physical devices, or may be a same physical device that integrates a logical function of the core network and a logical function of the radio access network.

The RAN 100 may be a cellular system related to the 3rd generation partnership project (3rd generation partnership project, 3GPP), for example, a 4th generation (4th generation, 4G) mobile communication system like a long term evolution (long term evolution, LTE) system, a 5th generation (5th generation, 5G) mobile communication system like an NR system, and a communication system evolved after 5G, like a 6th generation (6th generation, 6G) mobile communication system; or may be applied to a wireless fidelity (wireless fidelity, WiFi) system, a vehicle-to-everything (vehicle to everything, V2X) communication system, a device-to-device (device-to-device, D2D) communication system, an internet of vehicles communication system, and the like. The RAN 100 may alternatively be an open radio access network (open radio access network, O-RAN or ORAN), a cloud radio access network (cloud radio access network, CRAN), or a Wi-Fi system. The RAN 100 may alternatively be a communication system that integrates two or more of the foregoing systems.

The terminal and the network device provided in embodiments of this application may be used in the network device 110, or may be used in the terminal 120. It may be understood that FIG. 1 shows only a possible architecture of the communication system to which embodiments of this application may be applied. In another possible scenario, the architecture of the communication system may alternatively include another device.

The network device 110 is a node in the RAN, and may also be referred to as an access network device or a RAN node (or device). The network device 110 is configured to help the terminal implement wireless access. A plurality of network devices 110 in the communication system 1000 may be nodes of a same type, or may be nodes of different types. In some scenarios, roles of the network device 110 and the terminal 120 are relative. For example, a network element 120i in FIG. 1 may be a helicopter or an uncrewed aerial vehicle, and may be configured as a mobile base station. For a terminal 120j that accesses the RAN 100 through the network element 120i, the network element 120i is a base station. However, for a base station 110a, the network element 120i is a terminal. The network device 110 and the terminal 120 are sometimes referred to as communication apparatuses. For example, network elements 110a and 110b in FIG. 1 may be understood as communication apparatuses having a base station function, and network elements 120a to 120j may be understood as communication apparatuses having a terminal function.

In a possible scenario, the network device may be a base station (base station), an evolved NodeB (evolved NodeB, eNodeB), a transmission reception point (transmitting and receiving point, TRP), a transmission point (transmitting point, TP), a next generation NodeB (next generation NodeB, gNB), a next generation base station in a 6G mobile communication system, a base station in a future mobile communication system, a satellite, an access point (access point, AP) in a Wi-Fi system, for example, a home gateway, a router, a server, a switch, or a bridge, an integrated access and backhaul (integrated access and backhaul, IAB) node, a network device that is in a non-terrestrial network (non-terrestrial network, NTN) communication system of a mobile switching center and that may be deployed on a high-altitude platform or a satellite, or the like. The network device may be a macro base station (for example, 110a in FIG. 1), a micro base station or an indoor base station (for example, 110b in FIG. 1), a relay node or a donor node, or a radio controller in a CRAN scenario. The network device may alternatively be a device that functions as a base station in device-to-device (device-to-device, D2D) communication, internet of vehicles communication, uncrewed aerial vehicle communication, or machine communication. Optionally, the network device may alternatively be a server, a wearable device, a vehicle, a vehicle-mounted device, or the like. For example, an access network device in a vehicle-to-everything (vehicle to everything, V2X) technology may be a road side unit (road side unit, RSU).

In another possible scenario, the plurality of network devices collaborate to assist the terminal in implementing radio access, and different network devices respectively implement some functions of a base station. For example, the network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in the access network RAN, or the CU may be classified as a network device in the core network CN. This is not limited herein.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one unit of the CU (or the CU-CP and the CU-UP), the DU, and the RU in this application may be implemented by using a software module, a hardware module, or a combination of a software module and a hardware module.

In embodiments of this application, a form of the network device is not limited. An apparatus configured to implement a function of the network device may be a network device, or may be an apparatus, for example, a chip system, that can support the network device in implementing the function. The apparatus may be installed in the network device or used in matching with the network device.

The terminal 120 may also be referred to as user equipment (user equipment, UE), a mobile station (mobile station, MS), a mobile terminal (mobile terminal, MT), a user apparatus, a terminal device, an access terminal, a subscriber unit, a subscriber station, a mobile station, a remote station, a remote terminal, a mobile device, a user terminal, a terminal, a wireless communication device, a user agent, a user apparatus, or the like, or a device configured to provide voice or data connectivity for a user, or may be an internet of things device. For example, the terminal device includes a handheld device, a vehicle-mounted device, or the like that has a wireless connection function. Currently, the terminal device may be a mobile phone (mobile phone), a tablet computer (Pad), a computer having a wireless transceiver function, a notebook computer, a palmtop computer, a mobile internet device (mobile internet device, MID), a wearable device (for example, a smartwatch, a smart band, or a pedometer), a vehicle-mounted device (for example, a vehicle, a bicycle, an electric vehicle, an airplane, a ship, a train, or a high-speed train), a satellite terminal, a virtual reality (virtual reality, VR) device, an augmented reality (augmented reality, AR) device, a smart point of sale (point of sale, POS) machine, customer-premises equipment (customer-premises equipment, CPE), a wireless terminal in industrial control, a smart home device (for example, a refrigerator, a television, an air conditioner, or an electricity meter), a smart robot, a robot arm, a workshop device, a wireless terminal in self-driving, a wireless terminal in telemedicine, a wireless terminal in a smart grid (smart grid), a wireless terminal in transportation safety, a wireless terminal in a smart city, a wireless terminal in a smart home, a flight device (for example, a smart robot, a hot air balloon, an uncrewed aerial vehicle, or an airplane), or the like. The terminal device may alternatively be another device having the terminal function. For example, the terminal device may alternatively be a device undertaking a terminal function in D2D communication.

In embodiments of this application, a device form of the terminal is not limited. An apparatus configured to implement a function of the terminal device may be a terminal device, or may be an apparatus, for example, a chip system, that can support the terminal device in implementing the function. The apparatus may be installed in the terminal device or used in matching with the terminal device. In embodiments of this application, the chip system may include a chip, or may include a chip and another discrete device.

It should be noted that the solutions in embodiments of this application may also be applied to another communication system, and a corresponding name may also be replaced with a name of a corresponding function in the another communication system. In addition, a network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

In a communication system, a terminal may send a preamble sequence N times based on configuration information of a resource (for example, an RO and a preamble sequence) that is configured by a network device and that is for sending the preamble sequence N times. In this way, the terminal may send Msg1 by using more resources, that is, enhance the Msg1, to improve an uplink channel coverage capability of the terminal during initial access, thereby improving a random access success rate of the terminal.

For ease of understanding, the following describes technical terms in embodiments of this application.

### 1. Beam

The beam is a special directional sending or receiving effect formed by a transmitter or a receiver of the network device or the terminal by using an antenna array, and is similar to a light beam formed by converging light to a direction by using a flashlight. Signal sending and receiving in the form of the beam can effectively increase a signal transmission distance.

The beam may be a wide beam, a narrow beam, or another type of beam. A technology for forming the beam may be a beamforming technology or another technology. The beamforming technology may be specifically a digital beamforming technology, an analog beamforming technology, a hybrid digital/analog beamforming technology, or the like.

The beam usually corresponds to a resource. For example, during beam measurement, the network device measures different beams by using different resources, and the terminal feeds back measured resource quality, so that the network device can know quality of a corresponding beam. During data transmission, the beam may also be indicated by using the resource corresponding to the beam. For example, the network device indicates a transmission configuration indicator-state (state) by using a transmission configuration index (transmission configuration index, TCI) field in downlink control information (downlink control information, DCI), and the terminal determines, based on a reference resource included in the TCI-state, a beam corresponding to the reference resource.

In a communication protocol, the beam may be specifically represented as a digital beam, an analog beam, a spatial domain filter (spatial domain filter), a spatial filter (spatial filter), a spatial parameter (spatial parameter), a TCI, a TCI-state, or the like. A beam for sending a signal may be referred to as a transmit beam (transmission beam, or Tx beam), a spatial domain transmission filter (spatial domain transmission filter), a spatial transmission filter (spatial transmission filter), a spatial domain transmission parameter (spatial domain transmission parameter), a spatial transmission parameter (spatial transmission parameter), or the like. The beam for sending the signal may be understood as signal strength distribution formed in different directions in space after the signal is transmitted through an antenna. A beam for receiving a signal may be referred to as a receive beam (reception beam, or Rx beam), a spatial domain reception filter (spatial domain reception filter), a spatial reception filter (spatial reception filter), a spatial domain reception parameter (spatial domain reception parameter), a spatial reception parameter (spatial reception parameter), or the like. The beam for receiving the signal may be understood as signal strength distribution, in different directions in space, of a radio signal received through an antenna.

It may be understood that in embodiments of this application, unless otherwise specified, the beam is a transmit beam of the network device. During beam measurement, each beam of the network device corresponds to one resource. Therefore, an index or a serial number of the resource may uniquely identify the beam corresponding to the resource. In embodiments of this application, a beam is uniformly used for description, but the beam may be replaced with another equivalent concept, for example, an antenna port, quasi-co-location for receiving, quasi-co-location for sending, spatial domain filtering sending, or spatial domain filtering receiving, and is not limited to the foregoing concepts.

### 2. Antenna port

The antenna port is a logical concept, and there is no direct correspondence between an antenna port and a physical antenna. The antenna port is usually associated with a reference signal, and the antenna port may be understood as a transceiver interface on a channel through which the reference signal passes. For a low-frequency system, one antenna port may correspond to one or more antenna array elements. The array elements jointly send a reference signal. A receive end may consider the array elements as a whole, and does not need to distinguish between the array elements. For a high-frequency system, an antenna port may correspond to one beam. Similarly, the receive end only needs to consider the beam as an interface, and does not need to distinguish between array elements.

### 3. Port group

The port group may be understood as a set corresponding to a plurality of antenna ports. Specifically, a plurality of digital ports of a base station may be grouped to form a plurality of port groups. Alternatively, the port group may be a plurality of digital ports corresponding to a same analog beam, which is also referred to as a port group or a digital-analog port group for short. Alternatively, the port group may be a digital port set corresponding to a plurality of analog beams, which is also referred to as a port group or a digital-analog port group for short. Alternatively, a plurality of digital ports of a same analog beam are grouped into a plurality of subsets, and each subset is referred to as a port group or a digital-analog port group.

### 4. Random access (random access channel, RA)

The terminal may access a network by using a random access procedure, to implement uplink and downlink synchronization with the network device. The random access procedure is a procedure from the terminal sending a random access preamble to start attempting to access the network, up until a basic signaling connection is established between the terminal device and the network. In other words, the terminal may access the network by using the random access procedure. The random access procedure may be triggered by some events. For example, the terminal device may perform initial access from an idle state, perform a radio resource control (radio resource control, RRC) connection resume process from an inactive state, or perform an RRC connection reestablishment process.

As shown in FIG. 2, a random access procedure of 5G NR mainly includes the following five steps: S201 to S205. Descriptions are separately provided below.

S201: A network device broadcasts a synchronization signal and system information at a specific time-frequency position.

The synchronization signal and the system information are periodically sent by the network device based on configuration. After being powered on or when accessing a network again, a terminal scans the synchronization signal sent by the network device to perform downlink time and frequency synchronization, and also receives configuration information related to a random access resource in the system information.

S202: The terminal sends Msg1 to the network device based on the configuration information and a received SSB (denoted as an SSB #102).

The SSB #102 is an SSB that is selected by the terminal and that is in a plurality of received SSBs, and may be an SSB with best quality in the plurality of SSBs detected by the terminal.

The Msg1 includes a preamble sequence, that is, a preamble. A function of the preamble is to notify the network device that there is a random access request, and enable the network device to calculate a transmission delay between the network device and the terminal, so that the network device can calibrate uplink timing (uplink timing) and notifies the terminal device of calibration information by using timing advance (timing advance, TA) time adjustment information.

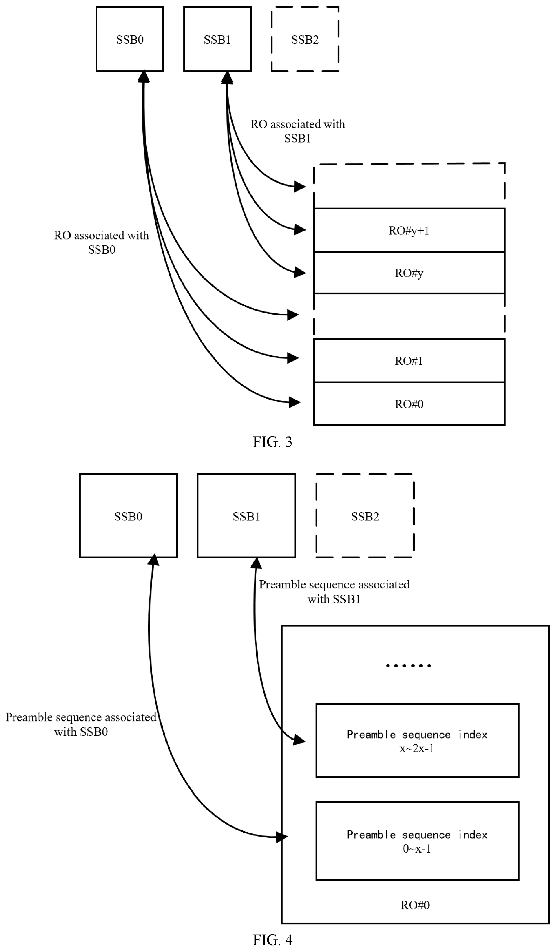

After determining the SSB #102, the terminal may select a random access resource corresponding to the SSB #102, for example, a time resource, a frequency resource, or a code domain resource, and send the Msg1 by using the random access resource. It may be understood that there is a mapping relationship between the SSB and the random access resource. In other words, there is a mapping relationship between the SSB and an RO/a preamble. The mapping relationship is configured by the network device. For example, as shown in FIG. 3, one SSB may be associated with a plurality of random access channel occasions (random access channel occasions, ROs). As shown in FIG. 4, both an SSB 0 and an SSB 1 in the figure are associated with an RO #0. In other words, a plurality of SSBs may be associated with one RO. In this case, the plurality of SSBs may correspond to different preamble sequences. Based on the mapping relationship between the SSB and the random access resource, after detecting the random access preamble, the network device can obtain a downlink beam for sending Msg2 (description is provided below). The RO is sometimes referred to as a physical random access channel occasion.

S203: The network device sends the Msg2 to the terminal based on the Msg1.

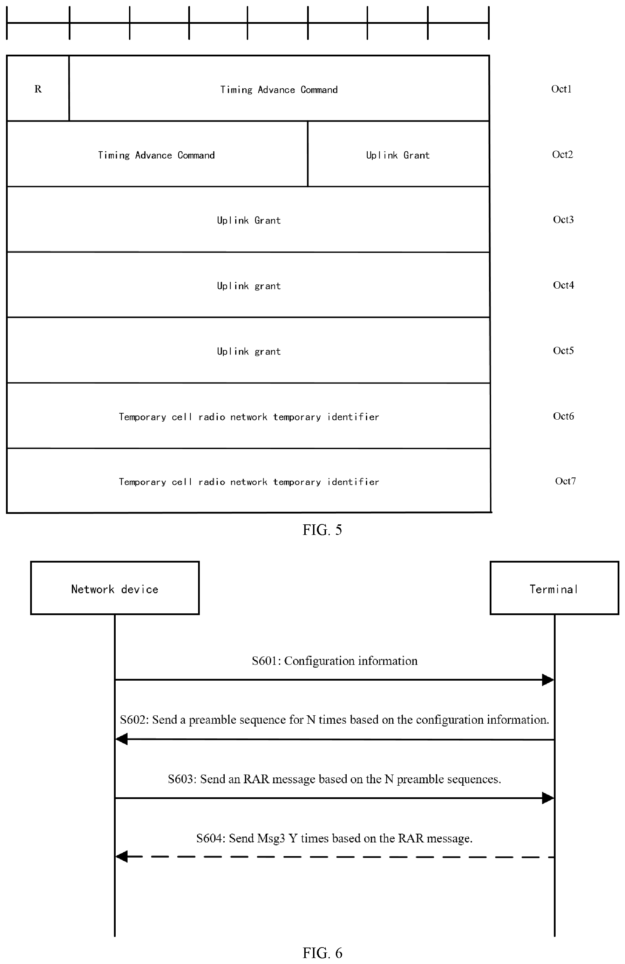

The network device estimates a timing advance of the terminal based on the received Msg1, and sends the Msg2 to the terminal. The Msg2 is a response message of the Msg1, and may also be referred to as a random access response (random access response, RAR). As shown in Table 1 and FIG. 5, the Msg2 may include a frequency hopping flag, physical uplink shared channel (physical uplink shared channel, PUSCH) frequency resource allocation, an uplink grant, a temporary cell radio network device temporary identifier, and the like. The uplink grant indicates a transmission resource of Msg3.

**Table 1**

| RAR grant content | Quantity of bits |
|---|---|
| Frequency hopping flag | 1 |
| PUSCH frequency resource allocation | 14, for an operation without shared |
| | spectrum channel access; or |
| | 12, for an operation with shared spectrum channel access |
| PUSCH time resource allocation | 4 |
| Modulation and coding scheme | 4 |
| PUSCH transmit power control command | 3 |
| Channel state information request | 1 |
| Channel access-CPext | 0, for an operation without shared spectrum channel access; or |
| | 2, for an operation with shared spectrum channel access |

S204: The terminal sends the Msg3 to the network device based on the Msg2.

After receiving the Msg2, the terminal may send the Msg3 on the transmission resource indicated by the uplink grant. The Msg3 may include layer 2 information and/or layer 3 information, for example, an RRC setup request message, an RRC resume request, a beam failure recovery, or a medium access control control element.

S205: The network device sends Msg4 to the terminal based on the Msg3.

After receiving the Msg3, the network device sends the Msg4 to the terminal, to indicate that the terminal successfully accesses the network. The Msg4 may include a contention resolution message, and the contention resolution message includes an identifier of a terminal device. When it is determined from the Msg3 that random access is contention-based random access, information about the terminal device that needs to perform contention is stored. When contention is resolved by using the Msg4, the terminal device that needs to perform contention and that is determined based on the Msg3 is processed, to resolve a contention problem.

In 5G NR, the terminal may access a 5G network by using a random access procedure. However, in a process in which the terminal performs random access, the random access may fail due to various reasons. For example, in the random access procedure, the terminal sends Msg1 once through one antenna port. However, in a case of a poor signal or the like, the network device may not detect the Msg1. As a result, the network device cannot return Msg2 based on the Msg1. In this case, after timing of a random access response window ends, the terminal needs to send the Msg1 again, that is, perform a random access operation again. Therefore, how to improve a random access success rate of the terminal is a hot topic currently discussed.

For the foregoing technical problem, embodiments of this application provide the following technical solutions, to improve a random access success rate of a terminal.

The following describes the technical solutions of this application with reference to accompanying drawings.

FIG. 6 is a schematic flowchart of a random access method according to an embodiment of this application. The method is applicable to communication between the terminal and the network device in the foregoing communication system.

S601: The network device sends configuration information. Correspondingly, the terminal receives the configuration information from the network device.

S602: The terminal sends a preamble sequence N times based on the configuration information. Correspondingly, the network device receives N preamble sequences from the terminal.

S603: The network device sends an RAR message based on the N preamble sequences.

S601 to S603 are separately described below.

For S601:
the configuration information indicates a resource for sending the preamble sequence N times, and N is an integer greater than 1. Sending the preamble sequence N times may be understood as sending a preamble sequence each time and sending the preamble sequence N times in total. For the preamble sequence, refer to related descriptions of "4. Random access" and "S202". Details are not described herein again. The resource may be an RO and/or a preamble sequence. To be specific, the preamble sequence may be sent N times on the RO, and the preamble sequence may be sent N times.

The configuration information may include at least one of the following: a first RO group for sending the preamble sequence N times, a first SSB group corresponding to an RO for sending the preamble sequence N times, or a first preamble sequence set for sending the preamble sequence N times.

The first RO group may include N ROs. To be specific, one preamble sequence may be sent on each of the N ROs, to implement sending of the preamble sequence N times. For example, if N is 4, the first RO group may include four ROs: an RO #1 to an RO #4. To be specific, one preamble sequence may be sent on each of the RO #1 to the RO #4. It may be understood that in different cases, preamble sequences respectively sent on the N ROs may be the same or different (description is provided below).

The first SSB group may include M SSBs, and M is a positive integer. When M is greater than 1, index values of the M SSBs are consecutive, time-frequency domain resources of at least two SSBs in the M SSBs are located in a same slot, or time-frequency domain resources of at least two SSBs in the M SSBs are located in adjacent slots.

The first preamble sequence set may include at least one preamble sequence. The at least one preamble sequence may be for being sent N times. For example, a preamble sequence #1 may be selected from the first preamble sequence set, and the preamble sequence #1 is sent N times. Alternatively, a plurality of preamble sequences, such as the preamble sequence #1 to a preamble sequence #3 may be selected from the first preamble sequence set, and the preamble sequence #1 to the preamble sequence #3 are used to implement sending of the preamble sequence N times. In this case, N is greater than or equal to 3. It may be understood that in different cases, the terminal may select one or more preamble sequences from the first preamble sequence set, and send the one or more preamble sequences N times (description is provided below).

There is a mapping relationship (denoted as a mapping relationship #1) between the first RO group, the first SSB group, and the first preamble sequence set. In other words, there is a mapping relationship between the first SSB group and the first RO group, and there is a mapping relationship between the first RO group and the first preamble sequence set. The mapping relationship #1 may be configured by the network device. In other words, the network device may first determine a mapping relationship (denoted as a mapping relationship set) between an SSB, an RO, and a preamble sequence, and then configure the mapping relationship set for the terminal by using signaling, so that the terminal can select a mapping relationship from the mapping relationship set based on an actual case, and send a preamble sequence N times based on a resource corresponding to the mapping relationship. In this case, the mapping relationship #1 may be a mapping relationship in the mapping relationship set. For ease of understanding, the following first describes the mapping relationship set, and then describes the first RO group, the first SSB group, and the first preamble sequence set.

The mapping relationship set may include a mapping relationship between the SSB and the RO and a mapping relationship between the RO and the preamble sequence. All SSBs sent by the network device may be grouped into a plurality of SSB groups. In other words, the mapping relationship between the SSB and the RO may be different mapping relationships between the plurality of SSB groups and the RO. At least a part of the plurality of SSB groups may include M SSBs. For example, there are eight SSBs in total. If M is 1, the SSBs may be grouped into eight SSB groups, that is, each SSB group includes one SSB. Alternatively, if M is 2, the SSBs may be grouped into four groups, and the four SSB groups each include two SSBs whose index values are consecutive, for example, an SSB #1 and an SSB #2, an SSB #3 and an SSB #4, an SSB #5 and an SSB #6, or an SSB #7 and an SSB #8. It may be understood that the plurality of SSB groups may alternatively include other groups with different quantities of SSBs. This is not limited.

By setting the mapping relationship set, after receiving a preamble sequence from the terminal, the network device may determine a downlink beam based on the preamble sequence and/or an RO on which the preamble sequence is received. In addition, when a terminal device sends N preamble sequences, the network device may jointly detect the N preamble sequences, to improve a random access success rate of the terminal. It may be understood that the network device may agree with the terminal on how to send the preamble sequence N times by using the mapping relationship set, to jointly detect the N preamble sequences sent by the terminal. The mapping relationship set may be grouped based on ROs, to be specific, specific ROs that can be for sending the preamble sequence N times are configured; or may be grouped based on preamble sequences, to be specific, specific preamble sequences that can be for sending the preamble sequence N times are configured. Cases are separately described below.

Case 1: RO-based grouping is performed, to determine the mapping relationship set.

The RO-based grouping may be understood as grouping ROs associated with the M SSBs into RO groups for sending preamble sequences different quantities of sending times. In other words, different RO groups support preamble sequence sending manners corresponding to different quantities of sending times. There are a plurality of mapping relationships between an SSB and an RO. For example, one SSB is associated with n ROs, and at least one SSB is associated with one RO, where n is an integer greater than 1. Therefore, RO grouping is different in different mapping relationships between the SSB and the RO. Details are described below.

Case 1.1: One SSB is associated with n ROs.

When M is equal to 1, for any SSB, if n is equal to N, the n ROs may be for sending the preamble sequence N times, that is, the preamble sequence may be sent once on each of the n ROs. In this case, the n ROs may be one RO group for sending the preamble sequence N times. If n is greater than N and n is greater than q×N, p RO groups may be set on the n ROs, each of the p RO groups may include N ROs, and the N ROs are consecutive, where p is an integer less than or equal to q. If n is less than N, the preamble sequence may be sent n times by default, that is, in this case, N is equal to n. It may be understood that, that the N ROs are consecutive may be understood as that the N ROs have adjacent or consecutive serial numbers, the N ROs occupy adjacent time domain positions, or the N ROs occupy different frequency domain positions of a same slot.

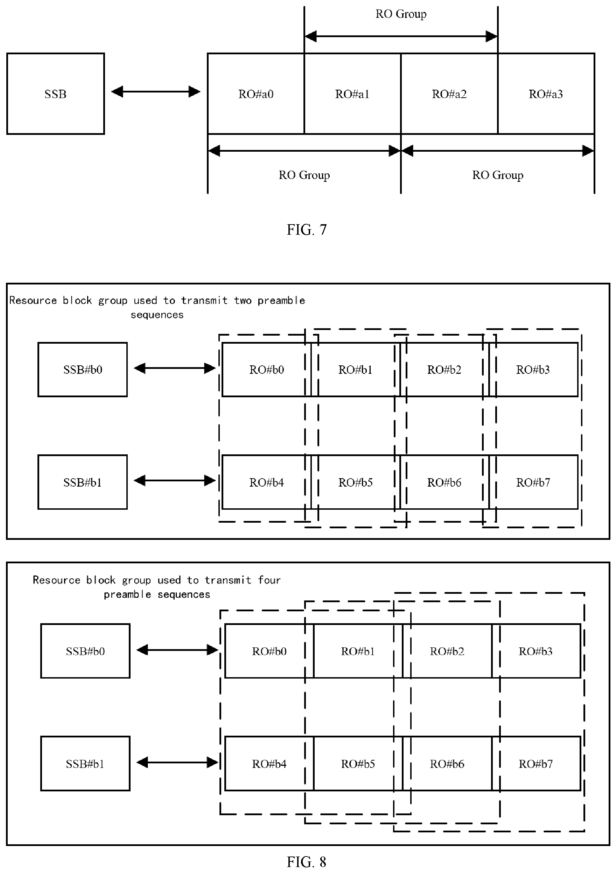

For example, as shown in FIG. 7, N is 2, and n is 4. To be specific, when one SSB is associated with four ROs, an RO #a0 and an RO #a1 may be one RO group for sending the preamble sequence twice, and/or an RO #a2 and an RO #a3 may be one RO group for sending the preamble sequence twice; or the RO #a1 and the RO #a2 may be one RO group for sending the preamble sequence twice. It may be understood that a plurality of ROs (the RO #a0 to the RO #a3) in FIG. 7 have consecutive serial numbers, and the plurality of ROs may occupy different time domain positions and/or frequency domain positions.

When M is greater than 1, any M SSBs correspond to M×n ROs, the M×n ROs are jointly grouped, each SSB group includes N ROs, and the N ROs are associated with at least two SSBs. For example, N/M ROs may be selected in n ROs corresponding to each SSB in the M SSBs, and are grouped as a same RO group. The N/M ROs in the same group associated with each SSB have adjacent or consecutive serial numbers, occupy adjacent time domain positions, or occupy different frequency domain positions of a same slot. In addition, ROs associated with different SSBs in the same group have a same local serial number. The local serial number may be understood as serial numbers of the n ROs corresponding to each SSB that are arranged starting from a preset value. The preset value may be any integer. In other words, the N ROs in each RO group obtained through grouping are relatively consecutive. The relatively consecutive may be understood as that, for the n ROs associated with each SSB in the M SSBs, a plurality of selected ROs for sending the preamble sequence N times are consecutive, that is, the plurality of ROs have adjacent or consecutive serial numbers, or occupy adjacent time domain positions, or occupy different frequency domain positions of a same slot. In addition, after the plurality of ROs selected from the M SSBs are sorted based on the serial numbers, for example, are sorted in ascending order of the serial numbers, the plurality of ROs are corresponding in position.

For example, as shown in FIG. 8, N is 2, M is 2, and n is 4. To be specific, two SSBs are associated with eight SSBs. An RO group for sending the preamble sequence twice may include at least one of the following: an RO #b0 and an RO #b4, an RO #b1 and an RO #b5, an RO #b2 and an RO #b6, or an RO #b3 and an RO #b7. Alternatively, an RO group for sending the preamble sequence four times may include at least one of the following: an RO group #b1, an RO group #b2, or an RO group #b3, where the RO group #b1 includes the RO #b0, the RO #b1, the RO #b4, and the RO #b5, the RO group #b2 includes the RO #b2, the RO #b3, the RO #b6, and the RO #b7, and the RO group #b3 includes the RO #b1, the RO #b2, the RO #b5, and the RO #b6. It can be learned that each RO group is corresponding in position. For example, the RO #b0 corresponds to the RO #b4, the RO #b1 corresponds to the RO #b5, the RO #b2 corresponds to the RO #b6, and the RO #b3 corresponds to the RO #b7. It may be understood that a plurality of ROs (the RO #b0 to the RO #b7) in FIG. 8 have consecutive serial numbers, and the plurality of ROs may occupy different time domain positions and/or frequency domain positions.

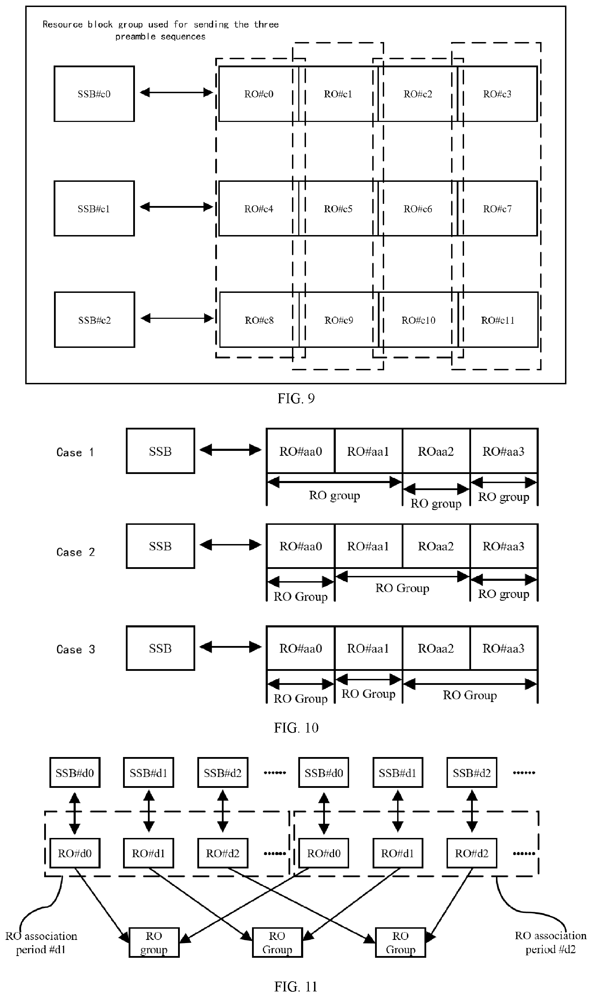

For another example, as shown in FIG. 9, N is 4, M is 3, and n is 4. To be specific, three SSBs are associated with 12 SSBs. An RO group for sending the preamble sequence thrice may include at least one of the following: an RO group #c1, an RO group #c2, an RO group #c3, or an RO group #c4, where the RO group #c1 includes an RO #c0, an RO #c4, and an RO #c8, the RO group #c2 includes an RO #c1, an RO #c5, and an RO #c9, and the RO group #c3 includes an RO #c2, an RO #c6, and an RO #c10, and the RO group #c4 includes an RO #c3, an RO #c7, and an RO #c11. It may be understood that a plurality of ROs (the RO #c0 to the RO #c11) in FIG. 9 have consecutive serial numbers, and the plurality of ROs may occupy different time domain positions and/or frequency domain positions.

It may be understood that the foregoing content describes how to configure, on a plurality of ROs associated with M SSBs, N ROs for sending the preamble sequence N times when one SSB is associated with n ROs. It may be further understood that RO grouping may be further performed based on a plurality of different quantities of sending times. For example, the plurality of ROs associated with the M SSBs are grouped into an RO group for sending the preamble sequence once, an RO group for sending the preamble sequence twice, and an RO group for sending the preamble sequence thrice. In this case, ROs included in each RO group are consecutive or relatively consecutive.

For example, as shown in FIG. 10, n is 4. To be specific, when one SSB is associated with four ROs, quantities of sending times are 1 and 2, that is, the preamble sequence is sent once and the preamble sequence is sent twice. In this case, an RO #aa0 and an RO #aa1 may be one RO group for sending the preamble sequence twice, and an RO #aa2 and an RO #aa3 may be two RO groups for sending the preamble sequence once; the RO #aa1 and the RO #aa2 may be one RO group for sending the preamble sequence twice, and the RO #aa0 and the RO #aa3 may be two RO groups for sending the preamble sequence once; or the RO #aa2 and the RO #aa3 may be one RO group for sending the preamble sequence twice, and the RO #aa0 and the RO #aa1 may be two RO groups for sending the preamble sequence once. It may be understood that a plurality of ROs (the RO #aa0 to the RO #aa3) in FIG. 10 have consecutive serial numbers, and the plurality of ROs may occupy different time domain positions and/or frequency domain positions.

For another example, M is 2, and n is 4. To be specific, when two SSBs are associated with eight ROs, quantities of sending times are 1 and 2, that is, the preamble sequence is sent once and the preamble sequence is sent twice. In this case, an RO group for sending the preamble sequence twice may include at least one of the following: an RO #bb0 and an RO #bb4, an RO #bb1 and an RO #bb5, an RO #bb2 and an RO #bb6, or an RO #bb3 and an RO #bb7. After the RO group for sending the preamble sequence twice is determined, each of remaining SSBs in the eight SSBs is one RO group for sending the preamble sequence once.

Case 1.2: At least one SSB is associated with one RO.

When M is equal to 1, any SSB is associated with one RO in one RO association period. When the preamble sequence is sent N times, ROs in different RO association periods may be grouped. For example, ROs associated with a same SSB in N consecutive RO association periods may be configured as one RO group, and the RO group is for sending the preamble sequence N times. In other words, the preamble sequence is sent on each of the ROs in the RO group.

For example, as shown in FIG. 11, N is 2, and one SSB is associated with one RO. In this case, for an SSB #dx, an RO #dx in an RO association period #d1 and an RO #dx in an RO association period #d2 may be configured as one RO group. The RO group is for sending the preamble sequence twice, and x is an integer greater than or equal to 0.

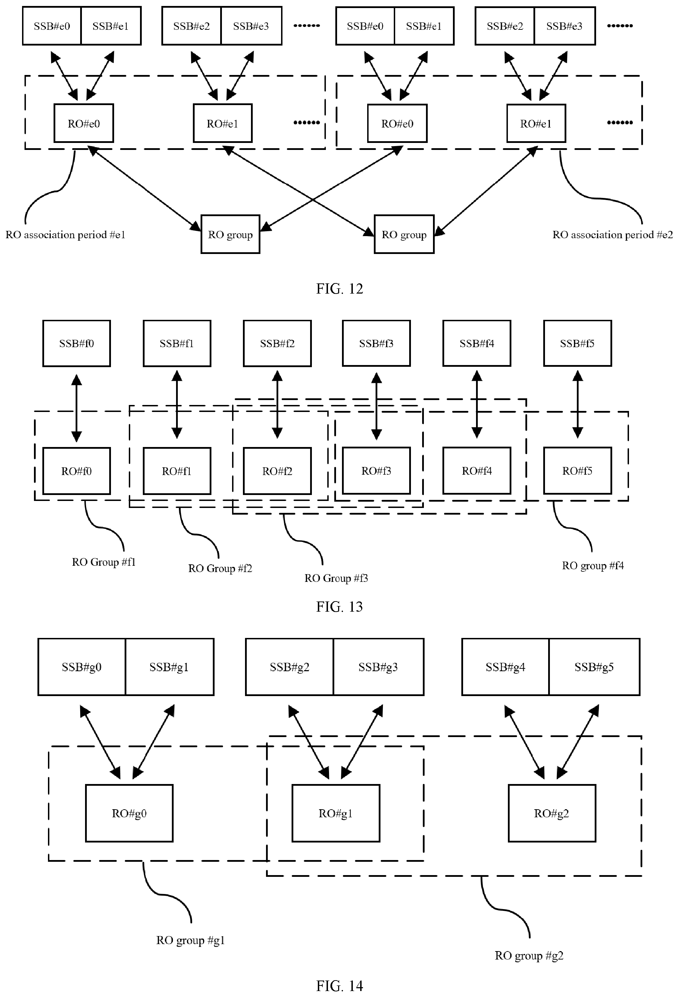

For another example, as shown in FIG. 12, N is 2, and two SSBs are associated with one RO. In this case, an RO #ex in an RO association period #e1 and an RO #ex in an RO association period #e2 may be configured as one RO group. The RO group is for sending the preamble sequence twice, and x is an integer greater than or equal to 0.

When M is greater than 1, any M SSBs are associated with M ROs in one RO association period. When the preamble sequence is sent N times, ROs in a same RO association period may be grouped. For example, M ROs associated with M SSBs in the same RO association period are grouped as one RO group. It may be understood that, in this case, M is equal to N. To be specific, when the terminal sends the preamble sequence N times, the network device needs beams corresponding to N SSBs to receive N preamble sequences.

For example, as shown in FIG. 13, there are six SSBs in total, N is 3, and one SSB is associated with one RO. In this case, three consecutive ROs in a same RO association period may be grouped as one RO group, that is, an RO group for sending the preamble sequence thrice may include at least one of the following: an RO group #f1, an RO group #f2, an RO group #f3, or an RO group #f4, where the RO group #f1 includes an RO #f0, an RO #f1, and an RO #f2, the RO group #f2 includes the RO #f1, the RO #f2, and an RO #f3, and the RO group #f3 includes the RO #f2, the RO #f3, and an RO #f4, and the RO group #f4 includes the RO #f3, the RO #f4, and an RO #f5.

For another example, as shown in FIG. 14, there are six SSBs in total, N is 2, and two SSBs are associated with one RO. In this case, two consecutive ROs in a same RO association period may be grouped as one RO group, that is, an RO group for sending the preamble sequence twice may include at least one of the following: an RO group #g1 or an RO group #g2, where the RO group #g1 includes an RO #g0 and an RO #g1, and the RO group #g2 includes the RO #g1 and an RO #g2.

It may be understood that the foregoing content describes how to configure, on a plurality of ROs associated with M SSBs, N ROs for sending the preamble sequence N times when at least one SSB is associated with one RO. It may be further understood that RO grouping may be further performed based on a plurality of different quantities of sending times. For example, the plurality of ROs associated with the M SSBs are grouped into an RO group for sending the preamble sequence once, an RO group for sending the preamble sequence twice, and an RO group for sending the preamble sequence thrice. In this case, ROs included in each RO group are consecutive or relatively consecutive.

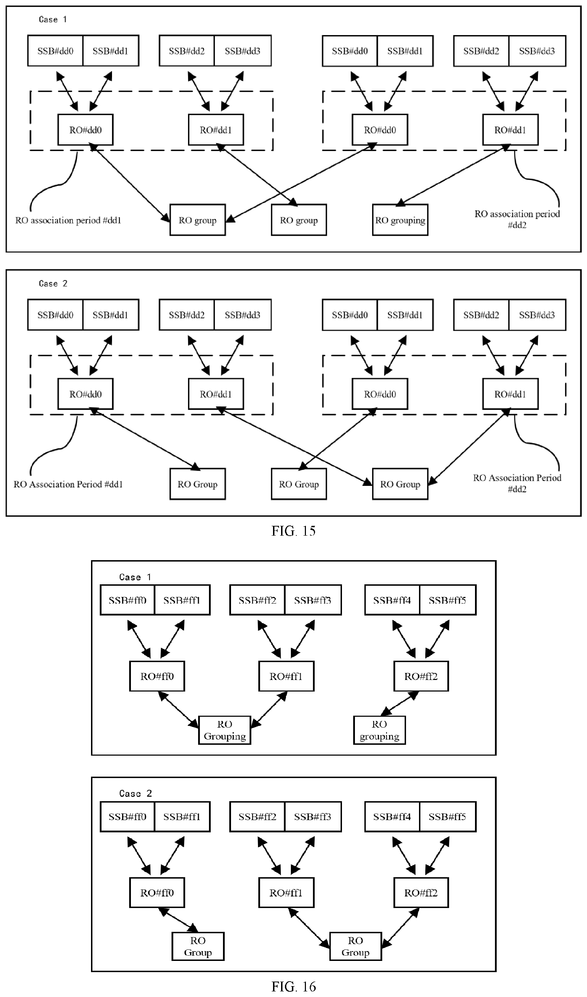

For example, as shown in FIG. 15, there are four SSBs in total, two SSBs are associated with one RO, an SSB #dd0 and an SSB #dd1 are associated with an RO #dd0, and an SSB #dd2 and an SSB #dd3 are associated with an RO #dd1. In this case, an RO #dd0 in an association period #dd1 and an RO #d0 in an RO association period #dd2 may be configured as one RO group for sending the preamble sequence twice, and an RO #dd1 may be one RO group for sending the preamble sequence once; or the RO #dd1 in the association period #dd1 and the RO #d1 in the RO association period #dd2 may be configured as one RO group for sending the preamble sequence twice, and the RO #dd0 may be one RO group for sending the preamble sequence once.

For another example, as shown in FIG. 16, there are six SSBs in total, two SSBs are associated with one RO, an SSB #ff0 and an SSB #ff1 are associated with an RO #ff0, an SSB #ff2 and an SSB #ff3 are associated with an RO #ff1, and an SSB #ff4 and an SSB #ff5 are associated with an RO #ff2. In this case, the RO #ff0 and the RO #ff1 may be one RO group for sending the preamble sequence twice, and the RO #ff2 may be one RO group for sending the preamble sequence once; or the RO #ff1 and the RO #ff2 may be one RO group for sending the preamble sequence twice, and the RO #ff0 may be one RO group for sending the preamble sequence once.

It may be understood that, in Case 1, the M SSBs are used as an example to describe RO grouping in different mapping relationships between the SSB and the RO. For a plurality of ROs associated with the M SSBs, each of the plurality of ROs can exist in only one RO group. In addition, all SSBs may be grouped into a plurality of SSB groups. Each SSB group in the plurality of SSB groups includes at least one SSB. An RO group associated with each group of SSBs may be grouped based on RO grouping described above, and there is no relationship between the SSB groups. In other words, a same RO group or different RO groups may be grouped for different SSB groups.

In addition, each RO group obtained through grouping may be associated with at least one preamble sequence. In other words, there is a mapping relationship between each RO group and the at least one preamble sequence. In addition, a same preamble sequence or different preamble sequences may be for being sent on an RO group. This is not limited. It may be understood that, regardless of whether the same preamble sequence or different preamble sequences are for being sent on the RO group, the sending corresponds to one random access request. For example, N different preamble sequences are for being respectively sent on N ROs in an RO group for sending the preamble sequence N times, and the sending N times corresponds to one random access request. For another example, one preamble sequence is for being repeatedly sent on the N ROs in the RO group for sending the preamble sequence N times, and the sending N times corresponds to one random access request.

Case 2: Preamble sequence-based grouping is performed, to determine the mapping relationship set.

The preamble sequence-based grouping may be understood as configuring, based on quantities of sending times of the preamble sequence, a preamble sequence set corresponding to each of the quantities of sending times. To be specific, when the M SSBs are associated with at least one RO, a plurality of preamble sequences associated with the at least one RO are grouped into different preamble sequence sets based on quantities of sending times, where the different preamble sequence sets support preamble sequence sending manners corresponding to different quantities of sending times. The preamble sequence set includes at least one preamble sequence, and preamble sequences in the preamble sequence sets corresponding to the quantities of sending times are different. For example, the M SSBs are associated with four ROs, the four ROs are associated with 100 preamble sequences, and the quantities of sending times are 1 and 2. In this case, a 1^{st} preamble sequence to a 50^{th} preamble sequence may be configured as a preamble sequence set #1, a 51^{st} preamble sequence to a 100^{th} preamble sequence are configured as a preamble sequence set #2, the preamble sequence set #1 is for sending a preamble sequence once, and the preamble sequence set #2 is for sending a preamble sequence twice. It may be understood that any preamble sequence in the preamble sequence set #1 is sent once in an access procedure, and any preamble sequence in the preamble sequence set #2 is sent twice in the access procedure.

It may be understood that, after the preamble sequence sets are determined, the preamble sequence selected from the preamble sequence set needs to be sent on the at least one RO associated with the M SSBs. There are a plurality of mapping relationships between an SSB and an RO. For example, one SSB is associated with n ROs, and at least one SSB is associated with one RO, where n is an integer greater than 1. Therefore, ROs for sending the preamble sequence different quantities of sending times are also different in different mapping relationships between the SSB and the RO. Details are described below.

Case 2.1: One SSB is associated with n ROs.

When M is equal to 1, one SSB is associated with the n ROs, and all the n ROs may be for sending the preamble sequence different quantities of sending times. When the preamble sequence is sent different quantities of sending times, a plurality of used ROs are consecutive. For example, N ROs for sending the preamble sequence N times are consecutive. For another example, S ROs for sending the preamble sequence S times are consecutive. S is an integer greater than 0, and S is different from N. It may be understood that, that the plurality of ROs are consecutive may be understood as that the plurality of ROs have adjacent or consecutive serial numbers, the plurality of ROs occupy adjacent time domain positions, or the plurality of ROs occupy different frequency domain positions of a same slot.

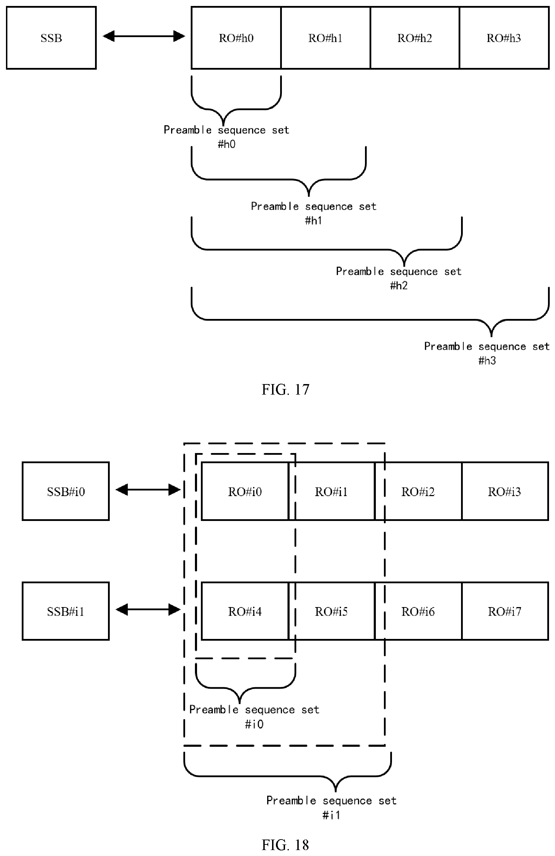

For example, as shown in FIG. 17, n is 4, and M is 1. To be specific, one SSB is associated with four ROs: an RO #h0 to an RO #h3, the four ROs are associated with 100 preamble sequences: a preamble sequence #h1 to a preamble sequence #h100, and quantities of sending times are 1, 2, 3, and 4. In this case, the 100 preamble sequences may be grouped into four preamble sequence sets, for example, a preamble sequence set #h0 to a preamble sequence set #h3. The preamble sequence set #h0 includes 25 preamble sequences for sending the preamble sequence once, for example, the preamble sequence #h1 to the preamble sequence #h25. The preamble sequence set #h1 includes 25 preamble sequences for sending the preamble sequence twice, for example, the preamble sequence #h26 to the preamble sequence #h50. The preamble sequence set #h2 includes 25 preamble sequences for sending the preamble sequence thrice, for example, the preamble sequence #h51 to the preamble sequence #h75. The preamble sequence set #h3 includes 25 preamble sequences for sending the preamble sequence four times, for example, the preamble sequence #h76 to the preamble sequence #h100. Any preamble sequence in the preamble sequence set #h0 may be sent on any RO in the RO #h0 to the RO #h3. Any preamble sequence in the preamble sequence set #h1 may be sent on each of two consecutive ROs in the four ROs, for example, sent on each of the RO #h0 and the RO #h1, each of the RO #h1 and the RO #h2, or each of the RO #h2 and the RO #h3. Any preamble sequence in the preamble sequence set #h2 may be sent on each of three consecutive ROs in the four ROs, for example, sent on each of the RO #h0, the RO #h1, and the RO #h2, or each of the RO #h1, the RO #h2, and the RO #h3. Any preamble sequence in the preamble sequence set #h3 may be sent on each of the RO #h0 to the RO #h3. It may be understood that a plurality of ROs (the RO #h0 to the RO #h3) in FIG. 17 have consecutive serial numbers, and the plurality of ROs may occupy different time domain positions and/or frequency domain positions.

When M is greater than 1, any M SSBs correspond to M×n ROs, and all the M×n ROs may be for sending the preamble sequence different quantities of sending times. When the preamble sequence is sent different quantities of sending times, a plurality of used ROs are relatively consecutive. For the relatively consecutive, refer to related descriptions of the foregoing "Case 1.1". Details are not described herein again. In addition, the plurality of ROs are associated with at least two SSBs in the M SSBs.

For example, as shown in FIG. 18, M is 2, and n is 4. To be specific, two SSBs are associated with eight ROs: an RO #i0 to an RO #i7. The eight ROs are associated with 100 preamble sequences: a preamble sequence #i1 to a preamble sequence #i100. Quantities of sending times are 2 and 4. In this case, the 100 preamble sequences may be grouped into two preamble sequence sets: a preamble sequence set #i0 and a preamble sequence set #i1. The preamble sequence set #i0 includes 50 preamble sequences for sending the preamble sequence twice, for example, the preamble sequence #i1 to the preamble sequence #i50. The preamble sequence set #i1 includes 50 preamble sequences for sending the preamble sequence four times, for example, the preamble sequence #i51 to the preamble sequence #i100. Any preamble sequence in the preamble sequence set #i0 may be sent on each of two relatively consecutive ROs in the eight ROs, for example, sent on each of the RO #i0 and the RO #i4, each of the RO #i1 and the RO #i5, each of the RO #i2 and the RO #i6, or each of the RO #i3 and the RO #h7. Any preamble sequence in the preamble sequence set #i1 may be sent on each of four relatively consecutive ROs in the eight ROs, for example, sent on each of the RO #i0, the RO #i1, the RO #i4, and the RO #i5, each of the RO #i1, the RO #i2, the RO #i5, and the RO #i6, or each of the RO #i2, the RO #i3, the RO #i6, and the RO #i7. It may be understood that a plurality of ROs (the RO #i0 to the RO #i7) in FIG. 18 have consecutive serial numbers, and the plurality of ROs may occupy different time domain positions and/or frequency domain positions.

Case 2.2: At least one SSB is associated with one RO.

When M is equal to 1, any SSB is associated with one RO in one RO association period. When the preamble sequence is sent N times, the preamble sequence may be sent once on each of ROs with a same serial number in N consecutive RO association periods. It may be understood that, for the terminal, the serial number may be a serial number of an RO associated with an SSB determined by the terminal.

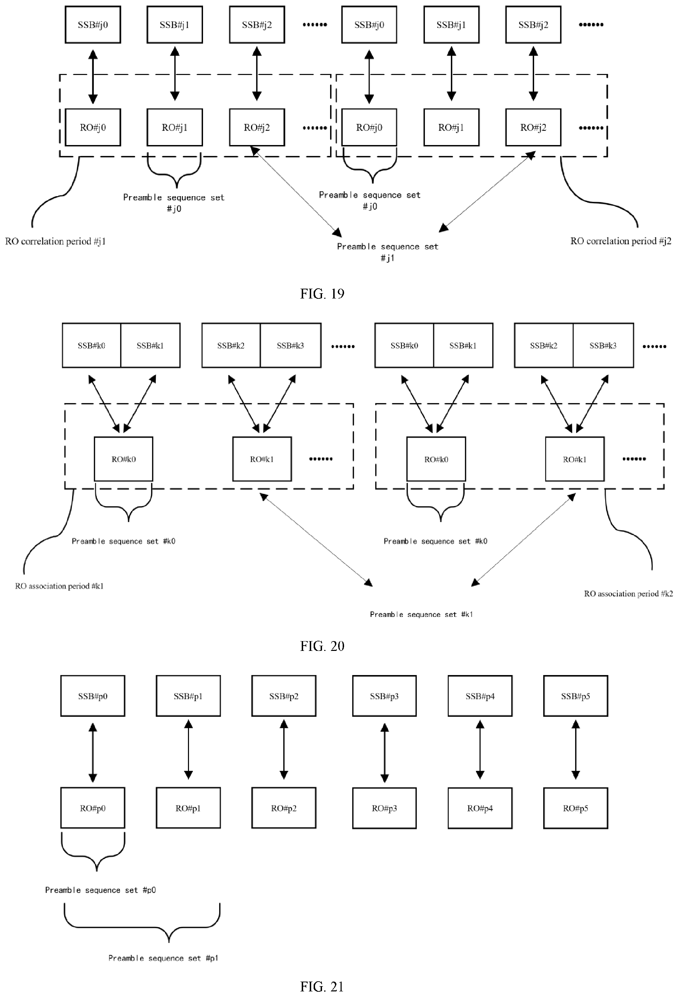

For example, as shown in FIG. 19, one SSB is associated with one RO, and there are eight SSBs in total: an SSB #j0 to an SSB #j7. The eight ROs are associated with 100 preamble sequences: a preamble sequence #j1 to a preamble sequence #j50. Quantities of sending times are 1 and 2. In this case, the 50 preamble sequences may be grouped into two preamble sequence sets: a preamble sequence set #j0 and a preamble sequence set #j1. The preamble sequence set #j0 includes the preamble sequence #1 to the preamble sequence #25 that are for sending the preamble sequence once. The preamble sequence set #j1 includes the preamble sequence #26 to the preamble sequence #50 that are for sending the preamble sequence twice. There is a mapping relationship between an SSB #jx and an RO #jx, and x takes values from 0 to 7 in sequence. When a preamble sequence (for example, the preamble sequence #j23) in the preamble sequence set #j0 is for sending the preamble sequence, the preamble sequence may be sent on each RO in an RO association period #j1, or may be sent on each RO in an RO association period #j2. In other words, each sending corresponds to one random access request. When a preamble sequence (for example, the preamble sequence #j48) in the preamble sequence set #j1 is for sending the preamble sequence, the same preamble sequence #48 may be sent on each of an RO #jx1 in the RO association period #j1 and an RO #jx1 in the RO association period #j2, where x1 is any integer from 0 to 7. In other words, the preamble sequence is sent twice, and the sending the preamble sequence #j48 twice corresponds to one random access request.

For another example, as shown in FIG. 20, two SSBs are associated with one RO, and there are eight SSBs in total: an SSB #k0 to an SSB #k7. The eight ROs are associated with 20 preamble sequences: a preamble sequence #k1 to a preamble sequence #k20. Quantities of sending times are 1 and 2. In this case, the 20 preamble sequences may be grouped into two preamble sequence sets: a preamble sequence set #k0 and a preamble sequence set #k1. The preamble sequence set #k0 includes the preamble sequence #k0 to the preamble sequence #k9 that are for sending the preamble sequence once. The preamble sequence set #k1 includes the preamble sequence #k10 to the preamble sequence #k19 that are for sending the preamble sequence twice. There is a mapping relationship between an SSB #kx and an RO #kx, and x takes values from 0 to 7 in sequence. When a preamble sequence (for example, the preamble sequence #k8) in the preamble sequence set #k0 is for sending the preamble sequence, the preamble sequence may be sent on each RO in an RO association period #k1, or may be sent on each RO in an RO association period #k2. In other words, each sending corresponds to one random access request. When a preamble sequence (for example, the preamble sequence #k18) in the preamble sequence set #k1 is for sending the preamble sequence, the same preamble sequence #18 may be sent on each of an RO #kx1 in the RO association period #k1 and an RO #kx1 in the RO association period #k2, where x1 is any integer from 0 to 3. In other words, the preamble sequence is sent twice, and the sending the preamble sequence #k18 twice corresponds to one random access request.

When M is greater than 1, any M SSBs are associated with M ROs in one RO association period. When the preamble sequence is sent N times, the preamble sequence may be sent on each of M ROs in a same RO association period. It may be understood that the M ROs are consecutive.

For example, as shown in FIG. 21, one SSB is associated with one RO, and there are six SSBs in total: an SSB #p0 to an SSB #p5. The six SSBs are associated with 50 preamble sequences: a preamble sequence #p1 to a preamble sequence #p50. Quantities of sending times are 1 and 2. In this case, the 50 preamble sequences may be grouped into two preamble sequence sets: a preamble sequence set #p0 and a preamble sequence set #p1. The preamble sequence set #p0 includes the preamble sequence #1 to the preamble sequence #25 that are for sending the preamble sequence once. The preamble sequence set #p1 includes the preamble sequence #26 to the preamble sequence #50 that are for sending the preamble sequence twice. When a preamble sequence (for example, the preamble sequence #p23) in the preamble sequence set #p0 is for sending the preamble sequence, the preamble sequence may be sent on any RO in an RO #p0 to an RO #p5. In other words, each sending corresponds to one random access request. When a preamble sequence (for example, the preamble sequence #p48) in the preamble sequence set #p1 is for sending the preamble sequence, the same preamble sequence #48 may be sent on each of the RO #p0 and RO #p1, each of the RO #p1 and RO #p2, each of the RO #p2 and RO #p3, each of the RO #p3 and RO #p4, or each of the RO #p4 and RO #p5. In other words, the preamble sequence is sent twice. In this case, the sending the preamble sequence #48 twice corresponds to one random access request.

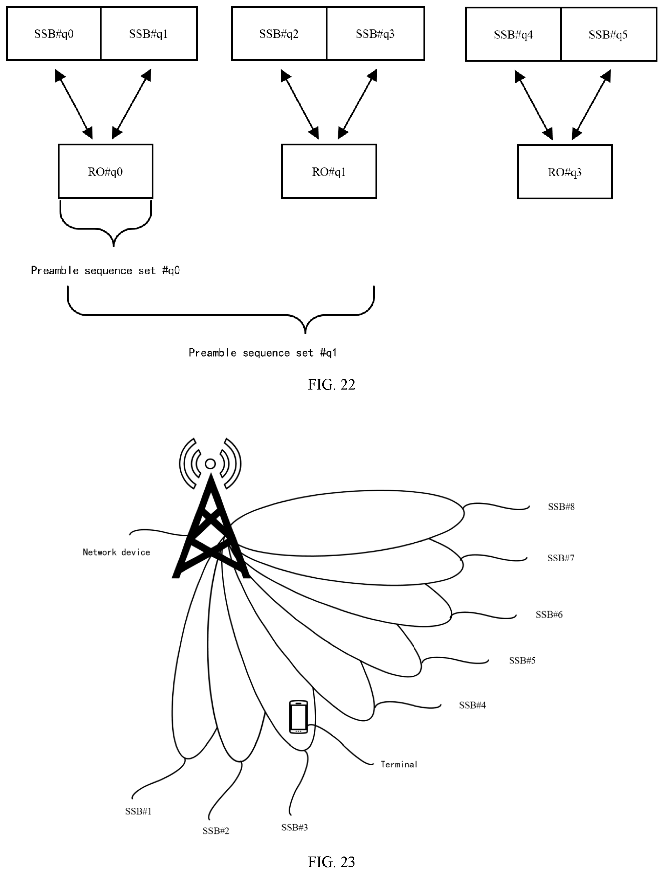

For another example, as shown in FIG. 22, two SSBs are associated with one RO, and there are six SSBs in total: an SSB #q0 to an SSB #q5. The six SSBs are associated with 20 preamble sequences: a preamble sequence #q1 to a preamble sequence #q20. Quantities of sending times are 1 and 2. In this case, the 20 preamble sequences may be grouped into two preamble sequence sets: a preamble sequence set #q0 and a preamble sequence set #q1. The preamble sequence set #q0 includes the preamble sequence #1 to the preamble sequence #10 that are for sending the preamble sequence once. The preamble sequence set #q1 includes the preamble sequence #11 to the preamble sequence #20 that are for sending the preamble sequence twice. When a preamble sequence (for example, the preamble sequence #q1) in the preamble sequence set #q0 is for sending the preamble sequence, the preamble sequence may be sent on an RO #q0, an RO #q1, or an RO #q2. In other words, each sending corresponds to one random access request. When a preamble sequence (for example, the preamble sequence #p48) in the preamble sequence set #q1 is for sending the preamble sequence, the same preamble sequence #4 may be sent on each of the RO #q0 and the RO #q1, or the same preamble sequence #p4 is sent on each of the RO #q1 and the RO #q2. In other words, the preamble sequence is sent twice. In this case, the sending the preamble sequence #4 twice corresponds to one random access request.

It may be understood that Case 2 describes grouping of the at least one preamble sequence associated with the M SSBs. All SSBs may be grouped into a plurality of SSB groups. Each of the plurality of SSB groups includes at least one SSB. A preamble sequence set associated with each group of SSBs and an RO for sending the preamble sequence may be configured based on the foregoing content, and there is no relationship between the SSB groups. In other words, different preamble sequence sets and RO groups may be configured for different SSB groups.

It may be further understood that the foregoing content describes how to configure a mapping relationship set. The mapping relationship set may indicate the resource for sending the preamble sequence N times, and the mapping relationship set may further indicate at least one resource for sending the preamble sequence R times. R is an integer greater than 0, and R is different from N. After configuring the mapping relationship set, the network device may send, to the terminal, the configuration information indicating the mapping relationship set, so that the terminal can determine, based on the configuration information and an actual case, a preamble sequence and an RO that are for sending the preamble sequence N times. It may be understood that the configuration information may indicate the resource for sending the preamble sequence N times, and the configuration information may include an SSB group set, an RO group set, or a total preamble sequence set.

The SSB group set may include at least one SSB group, and the SSB group set is related to how to group an SSB. When all SSBs are grouped based on M SSBs, the SSB group set may include at least one SSB group (denoted as an SSB group subset) obtained by grouping all the SSBs based on the M SSBs, and each SSB group in the SSB group subset includes M SSBs. It may be understood that all the SSBs may be alternatively grouped based on at least one other quantity of SSBs. In this case, the SSB group set may alternatively include at least one SSB group obtained by grouping all the SSBs based on the at least one group of SSBs. For example, there are four SSBs in total: an SSB #0 to an SSB #3, and M is 3. When all the SSBs are grouped based on three SSBs, four SSB groups may be obtained: an SSB group #1 to an SSB group #4. The SSB group #1 includes the SSB #0, the SSB #1, and the SSB #2. The SSB group #2 includes the SSB #1, the SSB #2, and the SSB #3. The SSB group #3 includes the SSB #2, the SSB #3, and the SSB #0. The SSB group #4 includes the SSB #3, the SSB #0, and the SSB #1.

It may be understood that the SSB group set may include the first SSB group, that is, the first SSB group may belong to the SSB group set. Specifically, the first SSB group may be any SSB group set in the SSB group subset. In the foregoing example, when the SSB group subset includes the SSB group #1 to the SSB group #4, the first SSB group may be any SSB group in the SSB group #1 to the SSB group #4.

The RO group set may include at least one RO group, and the RO group set is related to configuration of the mapping relationship set. When the mapping relationship set is configured based on RO grouping, the RO group set may include at least one RO group (denoted as an RO group subset) that is associated with each SSB group in an SSB group subset and that is for sending the preamble sequence N times. For example, the SSB group subset includes two SSB groups: an SSB group #11 and an SSB group #22, the SSB group #11 is associated with three RO groups for sending the preamble sequence N times, and the SSB group #22 is associated with four RO groups for sending the preamble sequence N times. In this case, the RO group subset includes five RO groups. When the mapping relationship set is configured based on preamble sequence grouping, the RO group set may include at least one RO group (denoted as an RO group subset) that is associated with each SSB group in the SSB group subset and that is for sending the preamble sequence N times; or the RO group set may include at least one RO group (denoted as an RO group subset) of all ROs associated with each SSB group in the SSB group subset. For example, in the foregoing example, all ROs associated with the SSB group #11 are one RO group, and all ROs associated with the SSB group #22 are one RO group. In this case, the RO group subset includes two RO groups.

It may be understood that, when the mapping relationship set is configured based on preamble sequence grouping, the RO group set may include the at least one RO group including all the ROs associated with each SSB group in the SSB group subset. In this case, a rule for selecting N ROs from all the ROs may be preconfigured, that is, the N ROs are consecutive or relatively consecutive.

It may be further understood that the RO group set may include the first RO group, that is, the first RO group may belong to the RO group set. Specifically, the first RO group may be any RO group set in the RO group subset. It may be understood that the first RO group is associated with the first SSB, that is, the N ROs included in the first RO group are associated with the M SSBs included in the first SSB. In addition, when M is equal to 1, the N ROs included in the first RO group are consecutive, that is, the N ROs have adjacent serial numbers, the N ROs occupy adjacent time domain positions, or the N ROs occupy different frequency domain positions of a same slot. When M is greater than 1, the N ROs included in the first RO group are relatively consecutive.

The total preamble sequence set may include at least one preamble sequence set, and the total preamble sequence set is related to configuration of the mapping relationship set. When the mapping relationship set is configured based on RO grouping, the total preamble sequence set may include at least one preamble sequence set (denoted as a preamble sequence subset) that is associated with each RO group in an RO group subset and that is for sending the preamble sequence N times. For example, the RO group subset includes two RO groups: an RO group #1 and an RO group #2, the RO group #1 is associated with one preamble sequence set, and the RO group #2 is associated with one preamble sequence set. In this case, the preamble sequence set subset includes two preamble sequence sets. When the mapping relationship set is configured based on preamble sequence grouping, the total preamble sequence set may include at least one preamble sequence set (denoted as a preamble sequence subset) for sending the preamble sequence N times.

It may be understood that the total preamble sequence set may include the first preamble sequence set, that is, the first preamble sequence set may belong to the total preamble sequence set. Specifically, the first preamble sequence set may be any preamble sequence set in the preamble sequence subset. It may be understood that, when the mapping relationship set is configured based on preamble sequence grouping, the first preamble sequence set includes at least one preamble sequence, and any preamble sequence in the at least one preamble sequence is sent N times in an access procedure.

It may be further understood that the foregoing content describes a relationship between the first SSB group, the SSB group subset, and the SSB group set, a relationship between the first RO group, the RO group subset, and the RO group set, and a relationship between the first preamble sequence set, the preamble sequence subset, and the total preamble sequence set. It can be learned that the mapping relationship #1 may be a mapping relationship in the mapping relationship set. In addition, the first SSB group, the first RO group, and the first preamble sequence set may be determined by the terminal based on an actual case (description is provided below).

For S602:
the terminal may determine, based on the configuration information, the resource for sending the preamble sequence N times, for example, the RO for sending the preamble sequence N times, and/or the preamble sequence for sending the preamble sequence N times. In other words, the terminal may determine the first SSB group, the first RO group, and the first preamble sequence set from the configuration information based on an actual case. Details are described below.

After receiving all the SSBs sent by the network device, the terminal may measure signal quality of each of the received SSBs, and determine, based on the measured signal quality of each of the SSBs, a manner of sending the N preamble sequences. When the signal quality of each of the SSBs is less than a signal quality threshold, the terminal may determine to send the preamble sequence N times. The signal quality threshold may be preset or predefined in a protocol, or may be configured by using a system message (for example, a system message block 1). This is not limited. It may be understood that, when the signal quality of each of the SSBs is less than the signal quality threshold, it may indicate that network quality is poor in this case. In this case, an uplink channel coverage capability of the terminal can be improved in the manner of sending the preamble sequence N times. It may be further understood that, when the signal quality of each of the SSBs is greater than or equal to the signal quality threshold, it may indicate that network quality is good in this case. In this case, a manner of sending the preamble sequence once may be used.

After determining to send the preamble sequence N times, the terminal may determine M SSBs corresponding to the sending the preamble sequence N times, that is, may determine one or more SSBs corresponding to the sending the preamble sequence N times. Determining of the first SSB group is related to the signal quality of the SSB received by the terminal. When M is equal to 1, the M SSBs may be an SSB with best signal quality measured by the terminal from a plurality of SSBs periodically sent by the network device. In other words, the first SSB group includes the SSB with best signal quality measured. When M is greater than 1, the M SSBs may be a plurality of SSBs with relatively good signal quality that are measured by the terminal from all SSBs periodically sent by the network device, and the plurality of SSBs are adjacent. In other words, the first SSB group includes the plurality of measured SSBs with relatively good signal quality. It may be understood that the SSB with best signal quality may be an SSB covering an area in which the terminal is located, and the plurality of SSBs with better signal quality may be SSBs covering an area in which the terminal is located and at least one SSB adjacent to the SSB. For example, as shown in FIG. 23, when the terminal is located in a coverage area of an SSB #3, the SSB #3 may be an SSB with best signal quality measured by the terminal, and the SSB #2 to the SSB #4 may be a plurality of SSBs with better signal quality measured by the terminal. The adjacent SSBs may be understood as SSBs whose index values are consecutive, SSBs whose time-frequency domain resources are located in a same slot, or SSBs whose time-frequency domain resources are located in adjacent slots. It may be further understood that, all SSBs periodically sent by the network device are pre-divided into a plurality of groups of SSB groups, and the terminal may select the first SSB from the plurality of groups of SSB groups based on an actual situation. For grouping all SSBs into a plurality of groups of SSB groups, refer to the foregoing related descriptions. Details are not described herein again.

After the first SSB group is determined, the first RO group may be determined based on the first SSB group, and the first preamble sequence set is determined based on the first RO group. The following provides specific descriptions.

When the RO is used to configure the mapping relationship set by group, the terminal may determine the first RO group from the at least one RO group associated with the first SSB group. In other words, the first RO group may be any RO group in the at least one RO group. Further, the terminal may determine the first preamble sequence set associated with the first RO group. It may be understood that, in this case, the preamble sequences sent N times may be the same or different. In other words, the terminal may determine, from the first preamble sequence set, at least one preamble sequence used N times of sending, that is, the terminal may select one preamble sequence from the first preamble sequence, and send the preamble sequence N times; or may select F preamble sequences from the first preamble sequence, and send the preamble sequence N times by using the F preamble sequences, where F is an integer greater than 1 and less than or equal to N.

When the mapping relationship set is configured by grouping the preamble sequence, the terminal may determine the first RO group from the at least one RO group associated with the first SSB group, and determine the first preamble sequence set for sending the N preamble sequences. It may be understood that in this case, any preamble sequence in the first preamble sequence set is sent N times in an access procedure. In other words, the terminal may select a preamble sequence from the first preamble sequence set, and send the preamble sequence N times, that is, the preamble sequences for sending the N times are the same preamble sequence.

After determining the first SSB group, the first RO group, the first preamble sequence set, and the preamble sequence used N times of sending, the terminal may separately send the preamble sequence on the N ROs included in the first RO group.

After completing the Nth time of preamble sequence sending, the terminal may start timing of the random access response window. In other words, the terminal does not receive the RAR message before completing sending of the Nth preamble sequence (which is described below). In other words, the N times of sending the preamble sequence occur within a time interval between receiving, by the terminal, an SSB from the network device and receiving an RAR message from the network device. In this way, it can be ensured that the terminal receives the RAR message only after sending the preamble sequence N times, thereby reducing overheads of the terminal, and avoiding invalid detection performed by the terminal.

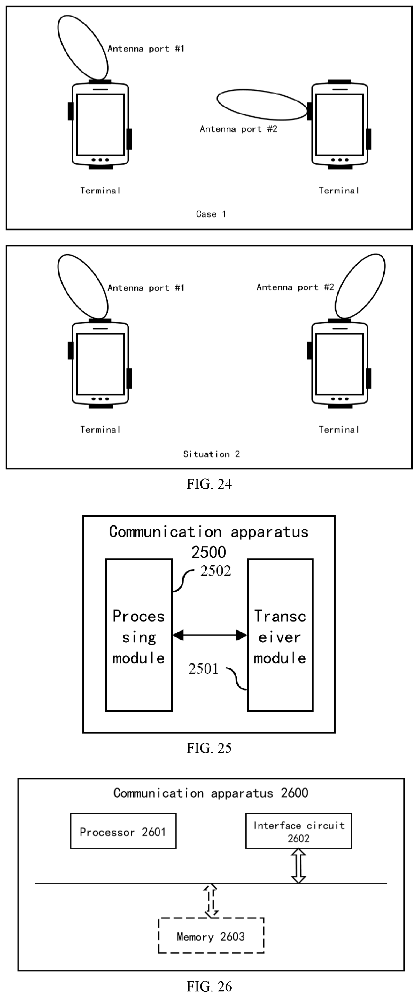

Optionally, the sending the preamble sequence N times based on the configuration information may specifically include: sending the preamble sequence N times based on the configuration information by using different or a same antenna port. It may be understood that different antenna ports may be corresponding to different physical antennas, or may be corresponding to a same physical antenna. For example, as shown in FIG. 24, two different antenna ports may be for sending the preamble sequence twice. In case 1, different antenna ports are corresponding to different physical antennas, and in case 2, different antenna ports are corresponding to a same physical antenna.

It may be understood that the N ROs for sending the N preamble sequences may be ROs in different RO association periods, or may be ROs in a same RO association period. In addition, when the N ROs are ROs in a same RO association period, the N ROs are associated with a same SSB, or the N ROs are associated with different SSBs. For details, refer to related descriptions in the foregoing "case 1" and "case 2". Details are not described herein again.

It may be further understood that, when M is greater than 1, reference signals for sending transmit power of the N preamble sequences may be the same. To be specific, each reference signal is associated with one of the M SSBs included in the first SSB group. In other words, the transmit power for sending the N preamble sequences may be calculated based on a receive power of one of the M SSBs included in the first SSB group. When M is greater than 1, reference signals for sending the transmit power of the N preamble sequences may be different. To be specific, the reference signals are separately associated with different SSBs in the M SSBs included in the first SSB group. In other words, the transmit power for sending the N preamble sequences may be calculated based on the receive power of each SSB included in the first SSB group.

For S603:
The RAR message is a response message of the N preamble sequences sent by the terminal. For details, refer to related descriptions of "4. Random access S203". Details are not described herein again. For a transmit beam for the RAR message, refer to an SSB used during random access. In other words, the RAR message may be sent by using a same beam of the SSB used during random access, and the beam is related to a preamble sequence sent by the terminal.

Specifically, when the terminal sends N preamble sequences, if the N preamble sequences are corresponding to one SSB, the terminal may send the RAR message by using a beam that is the same as the SSB; or if the N preamble sequences are corresponding to a plurality of SSBs, the terminal may send the RAR message by using a beam that is in the plurality of SSBs and that meets a preset condition. The preset condition may be a largest or smallest index value of the SSB, or another condition for determining one SSB from the plurality of SSBs. This is not limited. When the terminal sends the preamble sequence once, if one SSB corresponds to at least one RO, the network device may send the RAR message by using a same beam of an SSB associated with an RO that detects the preamble sequence; or if a plurality of SSBs correspond to one RO, and preamble sequences corresponding to different SSBs are the same, the network device may send the RAR message by using a same beam of an SSB that receives a strongest signal in the plurality of SSBs associated with the RO that detects the preamble sequence. A plurality of SSBs are corresponding to one RO, and different SSBs are corresponding to different preamble sequences. The network device may send the RAR message by using a same beam of an SSB associated with the detected preamble sequence and an SSB associated with the RO that detects the preamble sequence.

It may be understood that the network device may jointly detect the N preamble sequences based on the mapping relationship set, identify the random access request of the terminal, and send the RAR message based on the random access request. For example, if the SSB #1A corresponds to four ROs: an RO #a1 to an RO #a4, and the mapping relationship set is configured by using preamble sequence groups, the network device may detect preamble sequences in the RO #a1 to the RO #a4 by using the SSB #1A. For the preamble sequence #A1 to the preamble sequence #A25 in the preamble sequence set #A1 for sending the preamble sequence once, the network device may perform detection on each RO in the RO #A1 to the RO #A4 based on the preamble sequence #A1 to the preamble sequence #A25. For the preamble sequence #A26 to the preamble sequence #A50 in the preamble sequence set #A2 that is for sending the preamble sequence thrice, the network device may perform joint detection on two consecutive ROs in the RO #A1 to the RO #A4 based on the preamble sequence #A26 to the preamble sequence #A50. For details about joint detection, refer to the prior art. Details are not described herein again.

In conclusion, in this embodiment of this application, when performing random access, the terminal may send the N preamble sequences based on the resource that is configured by the network device and that is for sending the N preamble sequences. In this way, the terminal may send the Msg1 by using more resources, thereby improving an uplink channel coverage capability of initial access of the terminal, and improving a random access success rate of the terminal.

Optionally, with reference to the foregoing embodiment, the RAR message may include scheduling information indicating the Msg3, and the scheduling information may include at least one of the following: a sending manner, a transmit port, or a parameter for repeated sending.

The sending manner may be indicating whether the Msg3 is repeatedly sent. For example, a bit 0 may be indicating that the Msg3 is sent once, that is, the Msg3 is not repeatedly sent; or a bit 1 may be indicating that the Msg3 is repeatedly sent, that is, the Msg3 is sent for a plurality of times. It may be understood that the network device may determine, based on an actual situation, whether the terminal needs to repeatedly send the Msg3. For example, when a receive power of a preamble sequence received by the network device is greater than or equal to a receive power threshold, it may indicate that network quality is relatively good. In this case, it may be indicated that the Msg3 is sent once, so that communication overheads of the terminal can be reduced in a case in which Msg3 receiving is ensured. When a receive power of a preamble sequence received by the network device is less than the receive power threshold, it may indicate that network quality is relatively poor, and it may be indicated that the Msg3 can be repeatedly sent.

The transmit port may be indicating an antenna port for sending the Msg3. For example, the network device may indicate the antenna port of the Msg3 by indicating a preamble sequence received at a time. For example, the transmit port may be 3, that is, it is instructed to send the Msg3 by using an antenna port of the preamble sequence sent for the third time. It may be understood that the network device may determine the antenna port of the Msg3 based on received power of each received preamble sequence. Specifically, the network device may determine a preamble sequence with maximum receive power in the received preamble sequences, and send a sending order of the preamble sequence to the terminal, so that the terminal sends the Msg3 by using an antenna port for sending the preamble sequence, to increase a probability that the network device receives the Msg3.

The repeated sending parameter may be indicating a quantity of times of repeatedly sending the Msg3 and a time-frequency domain resource location when the Msg3 is repeatedly sent. The time-frequency resource location may be for sending the Msg3, and may be an RO. The scheduling information is carried in the RAR message, to indicate a sending manner of the Msg3. The network device may determine, based on an actual situation, a quantity of times of repeatedly sending the Msg3. For example, when network quality is relatively good, the quantity of times of sending the Msg3 may be relatively small; otherwise, the quantity of times of sending the Msg3 may be relatively large.

It may be understood that the network device may indicate a sending manner of the Msg3 by adding the scheduling information to the RAR message. In this way, the network device can receive the Msg3, and a sending manner of the Msg3 can be adjusted based on an actual situation. In addition, the scheduling information may further include other information, such as TA time adjustment information and an uplink grant. For details, refer to related descriptions of "4. Random access S203". Details are not described herein again.

Optionally, with reference to the foregoing embodiment, after the sending the N preamble sequences based on the configuration information (S603), the random access method may further include: receiving, by the terminal, a random access response RAR message, where a transmit beam for the RAR message is related to at least one SSB in the first SSB group. In other words, the network device may select one SSB from the M SSBs included in the first SSB group, for example, may select an SSB with a largest index value, an SSB with a smallest index value, or an SSB with highest signal strength received in the M SSBs, and send the RAR message by using a transmit beam corresponding to the SSB.

Further, after the terminal receives the RAR message, the random access method may further include: sending the Msg3 Y times (S604 in FIG. 6) based on the RAR message, where Y is an integer greater than 0. There are multiple sending manners in which the terminal sends the Msg3 for Y times, and the following separately describes the sending manners.

Manner 1: Y is 1, that is, the Msg3 is sent once.

After receiving the RAR message, the terminal may send the Msg3 once at a specified time-frequency domain position based on the RAR message. Specifically, if the N preamble sequences sent by the terminal are associated with one antenna port, that is, in step S602, the preamble sequence is sent N times by using one antenna port, the Msg3 may be sent once by using the antenna port. If the N preamble sequences sent by the terminal are associated with a plurality of antenna ports, that is, the preamble sequences are sent N times by using the plurality of antenna ports in step S602, an antenna port for sending the Msg3 once may be determined according to a preset rule. The preset rule may be that an antenna port for sending the preamble sequence for the Jth time is used, where J is an integer greater than 0 and less than N; or an antenna port that receives a downlink SSB signal with strongest energy in the plurality of antenna ports is not limited.

Manner 2: Y is greater than 1, that is, the Msg3 is sent for a plurality of times.

After receiving the RAR message, the terminal may send the Msg3 at a specified time-frequency domain position for a plurality of times based on the RAR message. The Msg3 may be sent for a plurality of times by using a same antenna port or different antenna ports; or the Msg3 may be sent for a plurality of times by using a same beam or different beams. Specifically, when one antenna port is for sending the Msg3 for a plurality of times, for a method for determining one antenna port, refer to related descriptions of the foregoing " Manner 2", and details are not described herein again. When the Msg3 is sent for a plurality of times by using different antenna ports, if the N preamble sequences sent by the terminal are associated with one antenna port (denoted as an antenna port #B1), the Msg3 may be sent for a plurality of times by using the antenna port #B1 and another antenna port, that is, the plurality of antenna ports for sending the Msg3 for a plurality of times include the antenna port #B1. If the N preamble sequences sent by the terminal are associated with a plurality of antenna ports, when Y is equal to N, the Msg3 may be sent for a plurality of times by using the plurality of antenna ports, that is, the Msg3 is sent for a plurality of times by using a plurality of antenna ports for sending the N preamble sequences. When Y is less than N, the Msg3 may be sent for a plurality of times by using an antenna port for sending the first Y preamble sequences in the N preamble sequences. When Y is greater than N, the plurality of antenna ports, the Msg3 may be repeatedly sent for a plurality of times by using the N preamble sequences.

It may be understood that the manner 1 and the manner 2 describe antenna ports that may be used when the Msg3 is sent for a plurality of times. It may be further understood that the antenna port may be indicated by the network device, for example, indicated by adding a transmit port to an RAR message, or may be determined by the terminal in the foregoing manner. This is not limited. It can be learned that, in this embodiment of this application, antenna ports for sending the Msg3 Y times are at least partially the same as antenna ports for sending the preamble sequence N times.

In addition, a manner of sending the Msg3 for a plurality of times by using different antenna ports is similar to a manner of sending the preamble sequence N times by using different antenna ports. For details, refer to the foregoing related descriptions. Details are not described herein again.

The foregoing describes in detail the random access method provided in embodiments of this application with reference to FIG. 6 to FIG. 11. The following describes in detail, with reference to FIG. 25 and FIG. 26, communication apparatuses configured to perform the channel measurement methods provided in embodiments of this application.

FIG. 25 is a diagram 1 of a structure of a communication apparatus according to an embodiment of this application. As shown in FIG. 25, the communication apparatus 2500 includes a transceiver module 2501 and a processing module 2502. For ease of descriptions, FIG. 25 shows only main components of the communication apparatus.

In some embodiments, the communication apparatus 2500 may be applied to the foregoing communication system, and perform a function of the terminal device in the random access method shown in FIG. 6. It can be understood that the communication apparatus 2500 may be a terminal, or may be a chip (system) or another component or assembly that may be disposed in a terminal, or may be an apparatus including a terminal. This is not limited in this application.

In some embodiments, the communication apparatus 2500 may be applied to the foregoing communication system, and perform a function of the network device in the random access method shown in FIG. 6. It may be understood that the communication apparatus 2500 may be a network device, may be a chip (system) or another part or component that may be disposed in the network device, or may be an apparatus including the network device. This is not limited in this application.

As shown in FIG. 26, the communication apparatus 2600 includes a processor 2601 and an interface circuit 2602. The processor 2601 and the interface circuit 2602 are coupled to each other. It may be understood that the interface circuit 2602 may be a transceiver or an input/output interface. Optionally, the communication apparatus 2600 may further include a memory 2603, configured to store instructions executed by the processor 2601, or store input data required by the processor 2601 to run instructions, or store data generated after the processor 2601 runs instructions. Sometimes, the interface circuit 2602 may also be understood as a part of the processor 2601. In this case, the communication apparatus 2600 includes the processor 2601.

When the communication apparatus 2600 is configured to implement the method shown in FIG. 6, the processor 2601 is configured to implement the function of the processing module 2502, and the interface circuit 2602 is configured to implement the function of the transceiver module 2501.

When the communication apparatus is a chip used in a terminal, the chip in the terminal implements functions of the terminal in the method embodiments. That the chip in the terminal receives information from a base station may be understood as that the information is first received by another module (for example, a radio frequency module or an antenna) in the terminal, and then sent by these modules to the chip in the terminal. That the chip in the terminal sends information to a base station may be understood as that the information is first sent to another module (for example, a radio frequency module or an antenna) in the terminal, and then sent to the base station by these modules.

When the communication apparatus is a chip used in a base station, the chip in the base station implements a function of the base station in the method embodiments. That the chip in the base station receives information from a terminal may be understood as that the information is first received by another module (for example, a radio frequency module or an antenna) in the base station, and then sent by these modules to the chip in the base station. That the chip in the base station sends information to a terminal may be understood as that the information is first sent to another module (for example, a radio frequency module or an antenna) in the base station, and then sent to the terminal by these modules.

In this application, that an entity A sends information to an entity B may be that A directly sends the information to B, or may be that A indirectly sends the information to B via another entity. Similarly, that the entity B receives information from the entity A may be that the entity B directly receives information sent by the entity A, or may be that the entity B indirectly receives information sent by the entity A via another entity. The entity A and the entity B herein each may be a RAN node or a terminal, or may be a module in a RAN node or a terminal. Information sending and receiving may be information exchange between a RAN node and a terminal, for example, information exchange between a base station and a terminal. Information sending and receiving may alternatively be information exchange between two RAN nodes, for example, information exchange between a CU and a DU. Information sending and receiving may alternatively be information exchange between different modules in an apparatus, for example, information exchange between a chip in a terminal and another module in the terminal, or information exchange between a chip in a base station and another module in the base station.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general purpose processor may be a microprocessor or any regular processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, at least one means one or more, and a plurality of means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

This application presents aspects, embodiments, or features around a system that may include a plurality of devices, components, modules, or the like. It should be appreciated and understood that, each system may include another device, component, module, and the like, and/or may not include all devices, components, modules, and the like discussed with reference to the accompanying drawings. In addition, a combination of these solutions may be used.

In embodiments of this application, terms "information (information)", "signal (signal)", "message (message)", "channel (channel)", and "signaling (signaling)" may sometimes be interchangeably used. It should be noted that meanings expressed by the terms are matchable when differences of the terms are not emphasized. The terms "of (of)", "corresponding, relevant (corresponding, relevant)", and "corresponding (corresponding)" may sometimes be interchangeably used. It should be noted that meanings expressed by the terms are matchable when differences of the terms are not emphasized. In addition, "/" mentioned in this application may indicate an "or" relationship.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A random access method, wherein the method comprises:
receiving configuration information, wherein the configuration information indicates a resource for sending a preamble sequence N times, and N is an integer greater than 1; and
sending the preamble sequence N times based on the configuration information.

2. The method according to claim 1, wherein the configuration information comprises at least one of the following: a first random access channel occasion RO group for sending the preamble sequence N times, a first synchronization signal and physical broadcast channel block SSB group corresponding to an RO for sending the preamble sequence N times, or a first preamble sequence set for sending the preamble sequence N times.

3. The method according to claim 2, wherein the first preamble sequence set comprises at least one preamble sequence, and any preamble sequence in the at least one preamble sequence is sent N times in an access procedure.

4. The method according to claim 2 or 3, wherein the first SSB group comprises M SSBs; and when M is greater than 1, index values of the M SSBs are consecutive, time-frequency domain resources of at least two SSBs in the M SSBs are located in a same slot, or time-frequency domain resources of at least two SSBs in the M SSBs are located in adjacent slots, wherein M is an integer greater than 0 and less than N.

5. The method according to claim 4, wherein the first RO group comprises N ROs, and the M SSBs are associated with the N ROs.

6. The method according to claim 5, wherein when M is equal to 1, the N ROs have adjacent serial numbers, the N ROs occupy adjacent time domain positions, or the N ROs occupy different frequency domain positions of a same slot.

7. The method according to any one of claims 1 to 6, wherein the sending the preamble sequence N times based on the configuration information comprises:
sending, based on the configuration information, the preamble sequence N times through different antenna ports.

8. The method according to any one of claims 1 to 7, wherein timing of a random access response window starts after sending of the preamble sequence for the N^{th} time is completed.

9. The method according to any one of claims 1 to 8, wherein after the sending the preamble sequence N times based on the configuration information, the method further comprises:
receiving a random access response RAR message, wherein a transmit beam for the RAR message is related to at least one SSB in the first SSB group.

10. The method according to claim 9, wherein the RAR message comprises scheduling information indicating a message 3 Msg3, the scheduling information comprises at least one of the following: a sending manner, a transmit port, or a parameter for repeated sending, and the sending manner indicates whether to repeatedly send the Msg3.

11. The method according to claim 9 or 10, wherein after the receiving the RAR message, the method further comprises:
sending the Msg3 Y times based on the RAR message, wherein an antenna port for sending the Msg3 Y times is at least partially the same as the antenna ports for sending the preamble sequence N times, and Y is an integer greater than 0.

12. A random access method, wherein the method comprises:
sending configuration information, wherein the configuration information indicates a resource for sending a preamble sequence N times, and N is an integer greater than 1; and
receiving N preamble sequences, and sending a random access response RAR message based on the N preamble sequences.

13. The method according to claim 12, wherein the configuration information comprises at least one of the following: a first random access channel occasion RO group for sending the preamble sequence N times, a first synchronization signal and physical broadcast channel block SSB group corresponding to an RO for sending the preamble sequence N times, or a first preamble sequence set for sending the preamble sequence N times.

14. The method according to claim 13, wherein the first preamble sequence set comprises at least one preamble sequence, and any preamble sequence in the at least one preamble sequence is sent N times in an access procedure.

15. The method according to claim 13 or 14, wherein the first SSB group comprises M SSBs; and when M is greater than 1, index values of the M SSBs are consecutive, time-frequency domain resources of at least two SSBs in the M SSBs are located in a same slot, or time-frequency domain resources of at least two SSBs in the M SSBs are located in adjacent slots, wherein M is an integer greater than 0 and less than N.

16. The method according to claim 15, wherein the first RO group comprises N ROs, and the M SSBs are associated with the N ROs.

17. The method according to claim 16, wherein when M is equal to 1, the N ROs have adjacent serial numbers, the N ROs occupy adjacent time domain positions, or the N ROs occupy different frequency domain positions of a same slot.

18. The method of any one of claims 12 to 17, wherein a transmit beam for the RAR message is related to at least one SSB in the first SSB group.

19. The method according to any one of claims 12 to 18, wherein the RAR message comprises scheduling information indicating a message 3 Msg3, the scheduling information comprises at least one of the following: a sending manner, a transmit port, or a parameter for repeated sending, and the sending manner indicates whether to repeatedly send the Msg3.

20. A communication apparatus, wherein the apparatus comprises a module configured to perform the method according to any one of claims 1 to 11, or a module configured to perform the method according to any one of claims 12 to 19.

21. A communication chip, wherein the communication chip comprises a logic circuit and a communication interface, the logic circuit is configured to execute computer instructions, the communication interface is used by the communication chip to communicate with another apparatus or chip, and when the logic circuit executes the computer instructions, the method according to any one of claims 1 to 11 is implemented, or the method according to any one of claims 12 to 19 is implemented.

22. A computer-readable storage medium, wherein the computer-readable storage medium comprises a computer program or instructions, and when the computer program or the instructions are run on a communication apparatus, the communication apparatus is caused to perform the method according to any one of claims 1 to 11, or perform the method according to any one of claims 12 to 19.

23. A computer program product, wherein the computer program product comprises a computer program or instructions, and when the computer program or the instructions are run on a communication apparatus, the method according to any one of claims 1 to 11 is performed, or the method according to any one of claims 12 to 19 is performed.
